Europäisches Patentamt

European Patent Office

Office européen des brevets

(19)

(11) **EP 0 528 199 B1**

(12) **EUROPÄISCHE PATENTSCHRIFT**

(45) Veröffentlichungstag und Bekanntmachung des Hinweises auf die Patenterteilung:
**17.04.1996 Patentblatt 1996/16**

(51) Int Cl.⁶: **G01D 5/22**, G01D 5/20

(21) Anmeldenummer: **92112550.6**

(22) Anmeldetag: **22.07.1992**

(54) **Geber zur induktiven Erzeugung eines Messsignals**

Transducer for inductively producing a measurement signal

Transducteur pour produire par induction un signal de mesure

(84) Benannte Vertragsstaaten:
**AT CH DE ES FR GB IT LI NL SE**

(30) Priorität: **16.08.1991 DE 4127209**

(43) Veröffentlichungstag der Anmeldung:
**24.02.1993 Patentblatt 1993/08**

(73) Patentinhaber: **Mehnert, Walter, Dr.**
**D-85521 Ottobrunn (DE)**

(72) Erfinder:
- **Mehnert, Walter, Dr.Dipl.-Ing.**
  **D-8012 Ottobrunn (DE)**
- **Theil, Thomas, Dr.Dipl.-Ing.**
  **D-8133 Feldafing (DE)**

(74) Vertreter: **Strasser, Wolfgang, Dipl.-Phys**
**Patentanwälte**
**Strohschänk, Uri, Strasser & Englaender**
**Innere Wiener Strasse 8**
**D-81667 München (DE)**

(56) Entgegenhaltungen:
EP-A- 0 028 971    DE-B- 1 217 085
DE-B- 2 511 683    US-A- 3 949 339

**Beschreibung**

Die Erfindung betrifft einen Geber der im Oberbegriff des Anspruches 1 beschriebenen Art.

Solche Stellungsgeber dienen dazu, ein elektrisches Signal zu erzeugen, mit dessen Hilfe eine ständige oder intermittierend auftretende Relativbewegung zwischen zwei Körpern so überwacht bzw. messend verfolgt werden kann, daß zu jedem beliebigen Zeitpunkt eine Information über die momentane Stellung des einen der beiden Körper bezüglich des anderen zur Verfügung steht.

Eine Variante stellen Lineargeber dar, bei denen z. B. die Bewegung und/oder momentane Stellung eines Maschinenschlittens, der gegenüber dem Maschinenrahmen verschiebbar ist, mit hoher Präzision erfaßt und gesteuert werden soll. Dazu ist es erforderlich, ständig ein Signal zu gewinnen, das auch dann, wenn sich der Schlitten mit hoher Geschwindigkeit bewegt, Auskunft über die momentane Position des Schlittens liefert.

Eine andere Ausführungsform stellen Drehgeber dar, mit deren Hilfe die momentane Winkellage eines rotierenden Körpers, beispielsweise des Rotors eines Elektromotors bezüglich des Stators, oder der Drehwinkel zwischen zwei gegeneinander verdrehbaren Körpern, beispielsweise der Azimut- oder Vertikalwinkel des Fernrohrs eines Theodoliten gemessen werden soll.

In ähnlicher Weise lassen sich mit Drehgebern die Winkelstellungen bzw. Drehgeschwindigkeiten von Kraftfahrzeugrädern oder die momentane Winkelstellung einer Vergaser-Drosselklappe messen.

Ein Lineargeber der eingangs genannten Art ist aus EP-A-0 028 971 bekannt. Er ist als Differentialtransformator ausgebildet, wobei jede der Sekundärwicklungen bifilar gewickelt ist, so daß sich zwei Meßspulengruppen mit jeweils zwei Meßspulen ergeben. Die beiden zu einer Gruppe gehörenden Sekundärwicklungen sind gegeneinander geschaltet, so daß jede Gruppe ein Ausgangssignal liefert, das gleich der Differenz der beiden Meßspulensignale ist. Wegen der bifilaren Wicklung sind die beiden Gruppen-Ausgangssignale V einander für jede Stellung des Differentialtransformators gleich.

Um Schwankungen der Erregerspannungen zu eliminieren, ist ein Zusatztransformator vorgesehen, dessen Sekundärseite ebenfalls von einer bifilaren Wicklung gebildet wird. Diese beiden Sekundärwicklungen des Zusatztransformators sind mit den Meßspulen-Gruppen so verbunden, daß sich die Ausgangsspannung der einen Zusatzwicklung zum zugehörigen Gruppen-Ausgangssignal addiert und so die Spannung $V_1$ liefert, während sich die Ausgangsspannung der anderen Zusatzwicklung, die wieder gleich der Ausgangsspannung der ersten Zusatzwicklung ist, vom zugehörigen Gruppen-Ausgangssignal subtrahiert, wodurch man die Spannung $V_2$ erhält. Aus den beiden so erzeugten Signalen $V_1$ und $V_2$ werden die Summe $V_1 + V_2$ und die Differenz $V_1 - V_2$ gebildet. Als Meßsignal dient dann der Quotient $(V_1 + V_2) / (V_1 - V_2)$.

Dies ist aber nichts anderes als die Division des verdoppelten Gruppen-Ausgangssignals V durch das verdoppelte Ausgangssignal der Sekundärseite des Zusatztransformators. Damit können zwar Schwankungen der Erregerspannung erfaßt werden; eine Eliminierung von additiv oder multiplikativ auf das Meßsignal aufgeprägten sonstigen Störspannungen ist aber nicht möglich. Sind die bifilaren Wicklungen nicht mit äußerster Genauigkeit gleich, ergeben sich zusätzliche Fehlerquellen.

Lineare Geber sind weiterhin der DE-B- 25 11 683 und der DE-B- 26 17 624 entnehmbar. Diese bekannten Geber umfassen jeweils eine ferromagnetische Fluß-Führungsvorrichtung, die zwei rechteckige, längliche, ebene Platten aufweist, die zueinander parallel so angeordnet sind, daß sie zwischen ihren Flachseiten einen Luftspalt einschließen. An einer der beiden kurzen Rechtecksseiten sind diese Platten durch einen senkrecht zu den Plattenebenen verlaufenden Steg so verbunden, daß sich ein U-förmiger Querschnitt ergibt. Dieser Steg erstreckt sich durch eine Erregerspule, die mit Wechselstrom gespeist wird, um einen Magnetfluß zu erzeugen, der über den Luftspalt hinweg einem ringförmig geschlossenen Weg folgen kann, wobei im Luftspalt ein in etwa homogenes Magnetfeld ausgebildet wird.

Diese Fluß-Führungsvorrichtung ist mit dem einen der beiden gegeneinander bewegbaren Körper verbunden, während mit dem anderen eine als gedruckte Schaltung ausgebildete Meßspulenanordnung gekoppelt ist, die zwei Meßspulen aufweist, von denen jede mehrere, jeweils ein Flächenelement umschließende Windungen umfaßt.

Die so gebildeten Flächenelemente besitzen unterschiedliche Größe und sind ineinander verschachtelt angeordnet. Insgesamt ergibt sich eine langgestreckte Meßspulenkonfiguration, die sich in Richtung der zu überwachenden Bewegung erstreckt und deren maximale Weite definiert. Die Trägerplatine der Meßspulen ist zwischen den beiden Platten der Fluß-Führungsvorrichtung und parallel zu diesen angeordnet. Die in Richtung des Magnetflusses erfolgende Projektion der einander deckungsgleich gegenüberliegenden Wandflächen des Luftspaltes zwischen den Platten auf die Fläche der Trägerplatine und damit der Meßspule definiert dort eine in etwa rechteckige Durchtrittsfläche, deren Längsrichtung sich senkrecht zur Bewegungsrichtung quer über die gesamte Meßspulenanordnung erstreckt und deren Breite in Bewegungsrichtung wesentlich kürzer als die maximale Bewegungsweite ist. In dieser Durchtrittsfläche durchsetzt der Hauptteil des im Spalt übertretenden Magnetflusses die Meßspulenanordnung, wobei aber auch erhebliche Streuflußanteile vorhanden sind, die außerhalb dieser rein geometrisch definierten Durchtrittsfläche verlaufen und zumindest teilweise ebenfalls die Flächenelemente der Meßspulenanordnung durchsetzen.

Verschiebt sich der eine der beiden zu überwachenden Körper gegen den anderen, so wird die Durchtrittsfläche

EP 0 528 199 B1

über die Flächenelemente der Meßspulenanordnung verschoben, wodurch sich der die einzelnen Windungen durchsetzende Magnetfluß ändert, so daß die Meßspulen jeweils ein elektrisches Ausgangssignal mit veränderbarer Amplitude liefern. Die von den Meßspulen erzeugten Ausgangs-Wechselspannungssignale werden zur Bildung eines Meßsignals verwendet, dessen Größe für die momentane Stellung, die der eine der beiden Körper bezüglich des anderen einnimmt, kennzeichnend ist. Zur Erzeugung eines Meßsignals, das symmetrisch zu dem der Mittelstellung zugeordneten Nullpotential liegt, sind die beiden Meßspulen so ausgebildet und zueinander spiegelbildlich angeordnet, daß Bereiche der Durchtrittsfläche, die bei einer Bewegung der beiden Körper die Überdeckung mit der einen Meßspule verlassen, in eine Überdeckung mit der anderen Meßspule eintreten und umgekehrt; die Differenz der Spannungen, die die beiden Meßspulen liefern soll dabei über einen möglichst großen Teil des zu überwachenden Bewegungsbereiches möglichst exakt einem linearen Verlauf folgen. Bei Konfigurationen, bei denen eine andere Ausgangssignal-Charakteristik erzielt werden soll, ist es in entsprechender Weise wünschenswert, daß die durch die gewählte Konfiguration theoretisch vorgegebene Kennlinie über den gesamten Bewegungsbereich hinweg möglichst genau eingehalten wird.

Außerdem soll die Differenzbildung aus den von den beiden Meßspulensignalen abgegebenen Spannungen dafür sorgen, daß additive Störgrößen aus dem Meßsignal eliminiert werden.

Beide Ziele werden beim Stand der Technik aber nur in unzureichendem Maße erfüllt. So ist beispielsweise der DE-B-25 11 683 ohne weiteres entnehmbar, daß der dort angestrebte lineare Verlauf der Meßsignal-Kennlinie bei Annäherung an die beiden Endlagen jeweils nicht in einer scharfen, sondern einer abgerundeten Spitze endet. Außerdem zeigt sich in der Praxis, daß die Kennlinie einer solchen Anordnung auch im Bereich des Nulldurchgangs nicht linear sondern Sförmig verzerrt verläuft. Zwar können diese Nichtliearitäten mit Hilfe der dem Geber nachgeschalteten Elektronik teilweise kompensiert werden. Dies erfordert jedoch einen zusätzlichen Aufwand und damit erhöhte Kosten.

Darüber hinaus zeigt sich, daß in einem durch die bekannte Differenzbildung gewonnenen Meßsignal immer noch erhebliche störende Signalanteile vorhanden sind, die durch die Differenzbildung nicht eliminiert werden können.

Aus US-A-3 949 339 ist ein Drehgeber mit zwei Meßspulen bekannt, die in Verbindung mit der Flußführungsvorrichtung so angeordnet sind, daß bei einer Drehbewegung der Magnetfluß, der die eine Meßspule durchsetzt, zunimmt, während der Magnetfluß durch die andere Spule sich gleichzeitig vermindert. Als Meßsignal dient die Summe der beiden Meßspulen-Ausgangsspannungen. Eine darüber hinausgehende Differenz- oder Quotientenbildung zur Eliminierung von multiplikativen und additiven Störspannungen findet nicht statt.

Demgegenüber liegt der Erfindung die Aufgabe zugrunde, induktive Geber der eingangs genannten Art so weiterzubilden, daß bei möglichst einfachem Aufbau und geringem Aufwand das mit Hilfe des Gebers erzielbare Meßsignal über einen möglichst großen Teil des Bewegungsbereiches mit möglichst großer Genauigkeit dem Konstruktions-Kennlinienverlauf folgt und dabei insbesondere frei von Störsignalanteilen ist.

Zu Lösung dieser Aufgabe sieht die Erfindung die im Anspruch 1 niedergelegten Merkmale vor.

Diesen Maßnahmen liegen die folgenden Erkenntnisse zugrunde:

a) Die bei Gebern nach dem Stand der Technik im Meßsignal immer noch vorhandenen Störsignalanteile sind multiplikativer Natur und können daher nur durch Quotientenbildung von zwei Signalen eliminiert werden, in die sie in etwa gleichmäßig eingehen.

b) Würde man diese Quotientenbildung in einer weitergeführten Form beispielsweise mit der Summe und der Differenz der beiden Spannungen $U_4$ und $U_5$ vornehmen, wie sie von der Vorrichtung gemäß der DE-B- 26 17 624 geliefert werden, so hätte dies zur Folge, daß die additiven Anteile wieder voll wirksam werden.

Gemäß der Erfindung wird daher die Quotientenbildung mit Hilfe von zwei Signalen vorgenommen, von denen jedes aus einem oder mehreren Gruppen-Ausgangssignalen, aus denen die additiven Störgrößen durch Differenzbildung bereits eliminiert sind. Um diese Signale bilden zu können, werden gemäß der Erfindung als Gruppen-Ausgangssignale also immer wenigstens zwei Spannungsdifferenzen, beispielsweise $\Delta U_1$ und $\Delta U_2$, erzeugt, aus denen dann zum Beispiel Quotienten der Art $\Delta U_1/(\Delta U_1 - \Delta U_2)$ oder $\Delta U_1/(\Delta U_1 + \Delta U_2)$ oder $(\Delta U_1 - \Delta U_2)/(\Delta U_1 + \Delta U_2)$ usw. gebildet und als Meßsignal verwendet werden können. Besonders vorteilhaft sind dabei solche Quotienten, die einen sich linear verändernden Zähler und einen konstanten Nenner aufweisen, weil sich dann ein linearer Meßsignalverlauf ergibt und keine Division durch Null auftreten kann. Je nach Ausbildung der Meßspulenanordnung haben die Quotienten

$$\frac{\Delta U_1 - \Delta U_2}{\Delta U_1 + \Delta U_2}$$

oder

$$\frac{\Delta U_1 + \Delta U_2}{\Delta U_1 - \Delta U_2}$$

3

EP 0 528 199 B1

bzw. diesen Quotienten entsprechende Ausdrücke diese vorzuziehenden Eigenschaften.

Auf besonders vorteilhafte Weise lassen sich die wenigstens zwei Differenzsignale zur Erzeugung der erfindungsgemäßen Zwischen- und Meßsignale dadurch erhalten, daß die Meßspulenanordnung wenigstens zwei Gruppen von Flächenelementen umfaßt, die in Bewegungs- bzw. Verschieberichtung gegeneinander versetzt angeordnet sind und von denen jede zwei Flächenelemente aufweist, über die sich die von der Fluß-Führungsvorrichtung definierte Durchtrittsfläche verschiebt. Die Spannungen der Meßspulenwicklungen, die die Flächenelemente der einen Gruppe umschließen, können dann zur Bildung von $\Delta U_1$ verwendet werden, während die Flächenelemente der anderen Gruppe $\Delta U_2$ liefern. Wegen der in Verschieberichtung versetzten Anordnung der beiden Gruppen haben $\Delta U_1$ und $\Delta U_2$ unterschiedliche Werte in Abhängigkeit von der zu messenden Position.

Um diesen Verlauf linear zu gestalten, ist vorzugsweise vorgesehen, daß die Flächenelemente und die Durchtrittsfläche einander geometrisch ähnlich sind und insbesondere die Form von länglichen Vierecken aufweisen, deren lange Seiten zueinander und zur Verschieberichtung in etwa parallel verlaufen und deren kurze Seiten sich zur Verschieberichtung senkrecht erstrecken. Darunter sind auch solche Flächenelemente und Durchtrittsflächen zu verstehen, die, wie es für Drehgeber besonders günstig ist, die Form von Teilkreisringen besitzen, die zur Drehachse der zu überwachenden Bewegung konzentrisch angeordnet sind. Die "langen Seiten" dieser Flächen sind dann der innere und der äußere Umfangsteilkreisbogen, die in dem Sinn "parallel" sind, daß sie zueinander konzentrisch liegen. Die zur Verschieberichtung senkrechten "kurzen Seiten" verlaufen dabei in radialer Richtung.

Um zu vermeiden, daß durch Flächenbereiche, die zwischen den Flächenelementen einer Gruppe liegen, Verfälschungen der Differenzsignale und damit auch des Meßsignals verursacht werden, weisen diese Flächenelemente wenigstens ein gemeinsames, zur Verschieberichtung senkrecht verlaufendes Randstück auf. Dieses Randstück wird entweder von einem Randleiter gebildet, der zu den beiden, auf diese Weise elektrisch miteinander verbundenen Meßspulenwicklungen gehört, die die beiden Flächenelemente umschließen, oder von zwei Randleitern, von denen der eine zur einen und der andere zur anderen Meßspulenwicklung gehört und die in Richtung des Magnetflusses gesehen deckungsgleich hintereinander in geringem Abstand angeordnet sind.

In beiden Fällen wird erreicht, daß bei einer Verschiebung der Durchtrittsfläche über dieses Randstück hinweg jede Magnetflußlinie, die das eine Flächenelement verläßt, gezwungenermaßen durch das jeweils andere Flächenelement hindurch verlaufen muß.

Bei Drehgebern, bei denen die beiden Flächenelemente einer jeden Gruppe als Halbkreisringe ausgebildet sind, die sich zu einem Vollkreisring ergänzen, sind zwei derartige Randbereiche vorhanden, die dann vorzugsweise beide in der oben beschriebenen Weise ausgebildet sind.

Differenzsignale mit besonders hoher Genauigkeit und Störsignalfreiheit lassen sich erreichen, wenn die beiden Flächenelemente von einer gemeinsamen Meßspulenwicklung umschlossen sind. Im Fall von Lineargebern wird dann der die beiden Flächenelemente voneinander trennende Randbereich von einem Paar von Anschlußleitern gebildet, die vorzugsweise senkrecht zur Verschieberichtung verlaufen und an denen die gewünschte Differenzspannung $\Delta U_1$ bzw. $\Delta U_2$ unmittelbar abgegriffen werden kann. Bei Drehgebern ist zusätzlich hierzu noch ein Trennsteg vorhanden, der den radial verlaufenden Anschlußleitern diametral gegenüberliegt und von einem radial verlaufenden Leiterabschnitt gebildet wird, der entweder mit beiden in Umfangsrichtung verlaufenden, kreisförmig geschlossenen Randleitern elektrisch leitend fest verbunden ist oder dessen elektrisch leitende Verbindung mit einem dieser Randleiter über einen steuerbaren EIN/AUS-Schalter geschlossen oder geöffnet werden kann.

Letzteres bietet den Vorteil, daß eine Meßspulenanordnung auf einer Trägerplatine mit nur zwei Leitbahnebenen so ausgebildet werden kann, daß sie mehr als zwei in Verschieberichtung gegeneinander versetzt angeordnete Gruppen von jeweils zwei Flächenelementen aufweist, die in Abhängigkeit von der Verschiebung der Durchtrittsfläche durch Öffnen und Schließen der EIN/AUS-Schalter selektiv aktiviert bzw. desaktiviert werden können. Dies erfolgt in der Weise, daß immer diejenigen beiden Gruppen zur Erzeugung der Differenzsignale $\Delta U_1$ und $\Delta U_2$ aktiviert sind, von deren Randbereichen die in Verschieberichtung vorn bzw. hinten liegenden Ränder der Durchtrittsfläche die größeren Abstände aufweisen. Dadurch können über den gesamten Meßbereich hinweg Differenz-, Zwischen- und Meßsignale gewonnen werden, die frei von Nichtlinearitäten sind, die bei Annäherung der Ränder der Durchtrittsfläche oder -flächen an die Randbereiche der Flächenelemente notwendigerweise auftreten.

Diese und andere vorteilhafte Weiterbildungen eines erfindungsgemäßen Gebers sind in den abhängigen Ansprüchen niedergelegt.

Die Erfindung wird im folgenden anhand von Ausführungsbeispielen unter Bezugnahme auf die Zeichnung näher erläutert. In dieser zeigen:

Fig. 1    in auseinandergezogener Darstellung den mechanischen Aufbau eines vorteilhaften Drehgebers,

Fig. 2    einen Schnitt durch den Drehgeber der Fig. 1 längs der Linien II-II,

Fig. 3    eine Meßspulenanordnung für den Drehgeber der Fig. 1 und 2 mit zwei um 90° gegeneinander versetzten

4

Gruppen von Flächenelementen,

Fig. 4        eine Meßspulenanordnung für den Drehgeber der Fig. 1 und 2 mit vier jeweils um 45° gegeneinander versetzten, durch steuerbare Schalter aktivierbaren und desaktivierbaren Gruppen von Flächenelementen,

Fig. 5        eine der Fig. 4 entsprechende Meßspulenanordnung für eine einkanalige Signalverarbeitung,

Fig. 6        eine Meßspulenanordnung für den Drehgeber der Fig. 1 und 2 mit sechs aneinander anschließenden, sich jeweils über 60° erstreckenden Flächenelementen mit der zugehörigen Schaltungsanordnung zur Erzeugung der Zwischensignale,

Fig. 7        eine schematisierte Draufsicht auf einen vorteilhaften Lineargeber,

Fig. 8        einen Schnitt durch den Lineargeber der Fig. 7 längs der Linie VIII-VIII,

Fig. 9        vier schematisierte Ausschnitte aus der Meßspulenanordnung von Fig. 7 zur Erläuterung der Differenzsignalgewinnung in Abhängigkeit von verschiedenen Stellungen der Durchtrittsflächen,

Fig. 10       eine perspektivische vereinfachte Ansicht eines weiteren Lineargebers, und

Fig. 11       in vergrößertem Maßstab eine von unten gesehene schematisierte Draufsicht auf den Kern des Lineargebers aus Fig. 10.

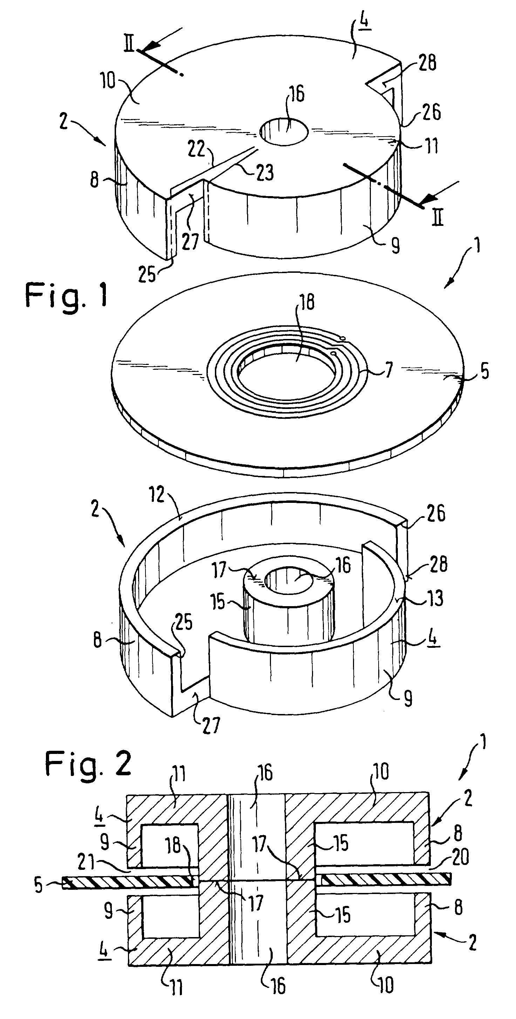

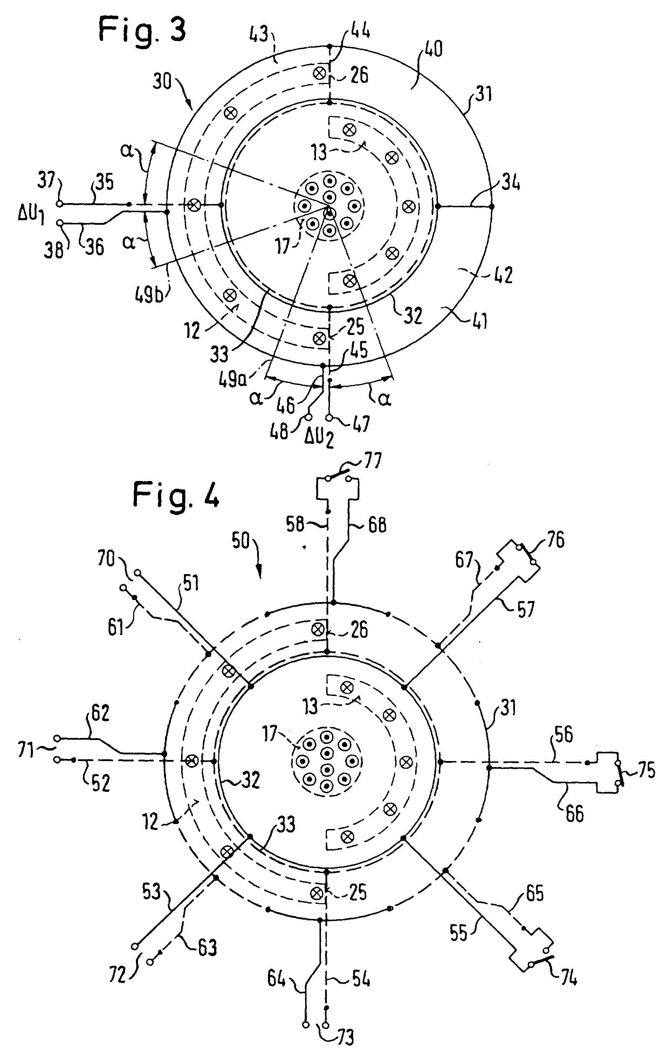

Der in den Fig. 1 und 2 dargestellte Drehgeber 1 besitzt eine Fluß-Führungsvorrichtung 2, die aus zwei identischen Kernschalen 4, 4 besteht, sowie eine Trägerplatine 5, auf der in Form von gedruckten Schaltungen sowohl eine Erregerspule 7 als auch in Fig. 1 weggelassene Meßspulen angebracht sind, die weiter unten unter Bezugnahme auf die Fig. 3 bis 6 genauer erläutert werden.

Jede der beiden Kernschalen 4, 4 besteht aus zwei einstückig miteinander verbundenen hohlen Halbzylindern, die unterschiedliche Radien besitzen und so angeordnet sind, daß ihre Zylinderachsen und ihre längs des jeweiligen Zylinderdurchmessers verlaufenden Ränder zusammenfallen, wobei ihre nach außen gekrümmten Halbzylinderwände 8,9 voneinander weg orientiert sind.

An der einen Stirnseite ist jeder der beiden Halbzylinder durch eine Bodenwand 10, 11 abgeschlossen, deren Form genau seinem halbzylindrischen Querschnitt entspricht. Die beiden Bodenwände 10, 11 können die gleiche axiale Dicke besitzen und gehen einstückig ineinander über. An der den Bodenwänden 10, 11 gegenüberliegenden Stirnseite besitzen die Halbzylinderwände 8, 9 freie Stirnflächen 12, 13, von denen jede die Form eines halben Kreisringes aufweist. Von den Bodenwänden 10, 11 erstreckt sich in der gleichen Richtung wie die Halbzylinderwände 8, 9 ein zentral angeordneter einstückig verbundener Zapfen 15, dessen axiale Höhe größer als die der Halbzylinderwände 8, 9 ist. In Längsrichtung ist der Zapfen 15 von einer konzentrischen Bohrung 16 durchzogen, die zur Aufnahme einer Welle dienen kann, um die die beiden Körper, deren gegenseitige Stellung messend überwacht werden soll, verdrehbar sind. Im zusammengebauten Zustand sind die beiden Kernschalen 4,4 so miteinander fest verbunden, daß die freien Stirnflächen 17, 17 der Zapfen 15, 15 aneinander anliegen, wobei die Bohrungen 16, 16 miteinander fluchten und sich die Stirnflächen 12, 12 bzw. 13, 13 der Halbzylinderwände 8, 8 bzw. 9, 9 im Abstand gegenüberliegen, und zwischen sich die Spalte 20, 21 einschliessen.

Die Trägerplatine 5 ist als Kreisscheibe mit einer zentralen Öffnung 18 ausgebildet, deren Durchmesser etwas größer als der Außendurchmesser der Zapfen 15, 15 ist. Der Außendurchmesser der Trägerplatine 5 ist etwas größer als der Durchmesser der beiden größeren Halbzylinderwände 8, 8.

Wie man der Fig. 2 entnimmt, wird die Trägerplatine 5 so angeordnet, daß sich die beiden Zapfen 15, 15 durch ihre zentrale Öffnung 18 hindurch erstrecken und sie parallel zu den Bodenwänden 10, 11 der Kernschalen 4,4 verläuft, wobei sie sich durch die Spalte 20, 21 erstreckt.

Auf ihrer in Fig. 1 oberen Seite weist die Trägerplatine 5 die spiralförmig ausgebildete Erregerspule 7 auf, die die zentrale Öffnung 18 unmittelbar umgibt. Statt dieser als gedruckte Schaltung ausgebildeten Erregerspule kann auch eine aus Draht gewickelte Zylinderspule in diesem Bereich angebracht werden.

Für den Betrieb wird die Trägerplatine 5 mit dem einen der beiden nicht dargestellten Körper, deren Drehbewegung messend überwacht werden soll, drehfest verbunden, während die aus den beiden Kernschalen 4, 4 gebildete Fluß-Führungsvorrichtung 2 mit dem anderen dieser beiden Körper in drehfester Verbindung steht.

Dem von der Erregerspule 7 erzeugten Magnetfluß werden zwei weitgehend symmetrische, im wesentlichen den gleichen magnetischen Widerstand besitzende, ringförmig geschlossene Wege angeboten. Der eine dieser beiden Wege, der als Meßweg dient, erstreckt sich durch die beiden Zapfen 15, 15 über die beiden Bodenwände 10, 10 mit dem größeren Radius, durch die Halbzylinderwände 8, 8 und über den zwischen diesen Halbzylinderwänden eingeschlossenen Spalt 20 hinweg, wobei der diesem Weg folgende Magnetfluß auf der Trägerplatine 5 angeordnete Meß-spulen durchsetzen kann. Der andere der beiden Wege verläuft durch die Zapfen 15, 15 über die Bodenwände 11, 11 mit dem kleineren Radius, über die Halbzylinderwände 9, 9 und den Spalt 21 hinweg. Im Bereich diese Weges sind keine Meßspulen vorgesehen. Er dient vielmehr als Ausgleichsweg, der den ihn durchsetzenden Magnetfluß an der Meßspulenanordnung vorbeiführt und durch symmetrische Aufteilung des Gesamtflusses für eine verbesserte Genauigkeit und Kennlinientreue sorgt. Der Ausgleichsweg kann jedoch auch als Meßweg benutzt werden, wenn man einen erhöhten Aufwand akzeptiert, z.B. einen dritten kreisförmig geschlossenen Leiter.

Insbesondere der Fig. 2 läßt sich entnehmen, daß die Halbzylinderwände 9, 9 mit dem kleineren Radius eine nahezu geschlossene Schirmanordnung bilden, außerhalb derer nur geringe Streufelder auftreten. Dies bedeutet, daß die Teile der Meßspulen, die sich aufgrund der momentanen relativen Winkelstellung auf der Seite der Halbzylinderwände 9, 9 mit dem kleineren Radius und damit außerhalb der Fluß-Führungsvorrichtung 2 befinden, nur sehr kleinen von der Erregerspule 7 kommenden Streuflüssen ausgesetzt sind.

In die in Fig. 1 obere Kernschale sind symbolisch zwei radial verlaufende und dann nach unten umknickende Magnetflußlinien 22, 23 eingezeichnet, die im radialen Bereich unmittelbar nebeneinander so verlaufen, daß die eine, nämlich die Flußlinie 23 sich in ihrem vertikalen Teil gerade noch durch die Halbzylinderwand 9 mit dem kleineren Radius erstreckt, während die Flußlinie 22 bereits durch die Halbzylinderwand 8 mit dem größeren Radius verläuft. Man sieht, daß die beiden Flußlinien diesen unterschiedlichen Wegen völlig ungestört folgen können. Mit anderen Worten: An den je nach Drehrichtung vorauseilenden oder nachlaufenden Spalträndern 25, 26 kommt es anders als beim Stand der Technik kaum zu Feldverzerrungen, da an den freien Endflächen 27, 28 der Fluß-Führungsvorrichtung 2 nahezu keine Streuflußlinien entlanglaufen.

Der beschriebene Drehgeber zeichnet sich durch eine hohe Symmetrie sowie dadurch aus, daß der die Erregerspule durchsetzende, von den beiden Zapfen 15, 15 gebildete Teil der Fluß-Führungsvorrichtung 2 keinen Luftspalt besitzt. Dadurch werden Fremdfelder wegen des geringen magnetischen Widerstandes stets durch die Zapfen 15, 15 geleitet und somit von der Meßspulenanordnung ferngehalten. Mit der in den Figuren 1 und 2 gezeigten Fluß-Führungsvorrichtung 2 für einen Drehgeber kann jede der in den Figuren 3 bis 5 dargestellten Meßspulenanordnungen 30, 50, 80 verwendet werden, die aufgrund ihrer unterschiedlichen Eigenschaften für jeweils andere Einsatzfälle besonders vorteilhaft sind.

Den Darstellungen der Fig. 3 bis 6 ist gemeinsam, daß sie die Meßspulenanordnung jeweils in einer zur Drehachse des Drehgebers parallelen Draufsicht zeigen, wobei die obere Kernschale 4 der Fluß-Führungsvorrichtung 2, die Konturen der Trägerplatine 5 und die Erregerspule 7 weggelassen sind. Von der unteren Kernschale 4 sind nur die Außenkontur der Stirnfläche 17 des Zapfens 15, die Stirnfläche 13 der Halbzylinderwand 9 mit dem kleineren Radius sowie die Stirnfläche 12 der Halbzylinderwand 8 mit dem größeren Radius dargestellt. Die zuletzt genannte Stirnfläche 12 definiert zusammen mit der ihr deckungsgleich gegenüberliegenden Stirnfläche 12 der oberen Kernschale 4 die Durchtrittsfläche, die sich bei einer Drehbewegung gegen die Flächenelemente der Meßspulenanordnungen in Umfangsrichtung verschiebt.

Die Kreise in den Stirnflächen 12, 13 und 17 symbolisieren den durch diese Flächen hindurchtretenden Magnetfluß, wobei jeweils ein Augenblick dargestellt ist, in dem der Magnetfluß durch die Stirnflächen 12 und 13 vom Betrachter weg und durch die Stirnfläche 17 des Zapfens 15 auf den Betrachter zu verläuft.

Soweit Leiter oder Leiterabschnitte in den Fig. 3 bis 6 mit durchgezogenen Linien wiedergegeben sind, liegen sie auf der dem Betrachter zugewandten Seite der Trägerplatine 5, während gestrichelt gezeigte Leiter oder Leiterabschnitte auf der Unterseite der Trägerplatine 5 angeordnet sind. Punkte, an denen eine Leiterbahn die Platinenseite wechselt, wobei die oben und unten verlaufenden Teile miteinander in elektrisch leitender Verbindung stehen, sind durch eine punktförmige Verdickung kenntlich gemacht. Überall dort, wo durchgezogene und gestrichelte Leitbahnabschnitte in geringem Abstand zueinander parallel wiedergegeben sind, dient dies nur zur besseren Darstellung. Tatsächlich verlaufen diese Leitbahnabschnitte in Blickrichtung der Fig. 3 bis 6 deckungsgleich übereinander. Die Ausgangsanschlüsse der Meßspulenwindungen sowie die Verbindungen zu Schaltern und Verstärkern sind nur symbolisch wiedergegeben und können jede geeignete Form aufweisen.

Die in Fig. 3 gezeigte Meßspulenanordnung 30 umfaßt einen geschlossenen, äußeren kreisförmigen Leiter 31, der konzentrisch zur Drehachse angeordnet ist und einen Radius besitzt, der etwas größer als der Außenradius der Stirnfläche 12 ist, sowie zwei gleichgroße, deckungsgleich hintereinander angeordnete, geschlossene, innere kreisförmige Leiter 32, 33, die ebenfalls zur Drehachse konzentrisch liegen und deren Radius etwas kleiner als der Innenradius der Stirnfläche 12 aber größer als der Außenradius der Stirnfläche 13 ist.

Der äußere kreisförmige Leiter 31 ist mit dem inneren kreisförmigen Leiter 32 durch einen radial verlaufenden Leiterabschnitt 34 elektrisch leitend verbunden, dem ein Anschlußleiter 35 um 180° versetzt, d.h. diametral gegenüberliegt, der mit dem inneren kreisförmigen Leiter 32 elektrisch leitend verbunden ist und von diesem ausgehend in der unteren Leitbahnebene radial nach außen verläuft. Dabei ist er von dem auf der oberen Leitbahnebene befindlichen, äußeren kreisförmigen Leiter 31 elektrisch isoliert, der seinerseits mit einem Anschlußleiter 36 in elektrisch leitender Verbindung steht, der in der oberen Leitbahnebene zunächst deckungsgleich mit dem Anschlußleiter 35 radial nach außen verläuft. Erst in einem radialen Abstand, in dem mit Sicherheit keine merklichen Streuflüsse mehr vorhanden sind, verlaufen die beiden Anschlußleiter 35, 36 voneinander getrennt, um Raum für die Anschlußkontakte 37, 38 zu schaffen.

Die Leiter 31, 32, 34 und 35 umschließen die zwei Flächenelemente 40, 41 einer ersten Gruppe, von denen jedes die Form eines Halbkreisringes besitzt und die so unmittelbar aneinander anschließen, daß sie sich zu einem Vollkreisring ergänzen, wobei sie durch die von den Leiterabschnitten 34 und 35 gebildeten Trennstege voneinander getrennt sind. Die beiden Flächenelemente 40, 41 sind der durch die Stirnfläche 12 definierten Durchtrittsfläche geometrisch ähnlich und erstrecken sich in Umfangsrichtung, die hier gleich der Verschieberichtung ist, jeweils genau so weit wie diese, nämlich über 180°. In der zur Verschieberichtung senkrechten Richtung weisen die Flächenelemente 40, 41 größere Abmessungen als die Durchtrittsfläche auf, damit die magnetischen Streuflüsse, die an den radial inneren und äußeren Rändern des von den beiden Stirnflächen 12, 12 gebildeten Spaltes 20 (Fig. 2) übertreten, mit ihren meßbaren Anteilen möglichst vollständig innerhalb der Flächenelemente 40, 41 bleiben.

Der wesentliche Unterschied der von den Flächenelementen 40, 41 gebildeten Meßspulenanordnung zu ähnlichen Anordnungen, wie sie beispielsweise in der älteren DE-OS 41 13 745 beschrieben sind, besteht darin, daß hier nicht nur der innere kreisförmige Leiter 32 sondern auch der äußere kreisförmige Leiter 31 vollständig geschlossen ist.

Bei einer Anordnung, bei der der äußere Leiter 31 dort, wo der Anschlußleiter 35 nach außen verläuft, aufgetrennt ist und seine beiden freien Enden mit jeweils einem eigenen Anschlußleiter nach außen geführt sind, ist klar, daß man zwischen den drei Anschlußleitern zwei Wechselspannungen $W_1$ und $W_2$ abgreifen kann, deren Amplitude von der stellungsabhängigen Größe der Magnetflüsse abhängt, die die Flächenelemente 40, 41 durchsetzen.

Für die in Fig. 3 gezeigte Stellung der Stirnfläche 12 wären diese beiden Spannungen $W_1$ und $W_2$ gleich groß. Nach einer Drehung um 90°, aufgrund derer die Stirnfläche 12 so weit nach oben gewandert ist, daß der von ihr ausgehende Magnetfluß mit Ausnahme der an den Endkanten 25, 26 vorhandenen Streuanteile nur noch das Flächenelement 40 durchsetzt, würden die von diesem Flächenelement gelieferte Spannung $W_1$ ihr Maximum und die vom Flächenelement 41 gelieferte Spannung $W_2$ ihr Minimum annehmen, das wegen der erwähnten Streuflüsse allerdings nicht exakt gleich Null ist.

Umgekehrt würden nach einer entgegengesetzt gerichteten Drehung um 90° die Spannung $W_1$ ihr Minimum und die Spannung $W_2$ ihr Maximum erreichen, während nach einer Drehung um 180° die Spannungen $W_1$ und $W_2$ wieder gleich wären. Würde man die Differenz dieser beiden Spannungen $\Delta W = W_1 - W_2$ bilden, so erhielte man für die gezeigte Stellung den Wert Null, für die beiden beschriebenen Drehungen um 90° ein positives bzw. negatives Extremum und nach einer Drehung um 180° wieder den Wert Null. Zwischen diesen Werten würde die Hüllkurve der Wechselspannung $\Delta W$ einen in etwa dreiecksförmigen Verlauf zeigen, der im Bereich der Nulldurchgänge eine sehr gute Linearität besitzt, die aber im Bereich der Dreiecksspitzen um so schlechter wird, je mehr sich eine der beiden Endkanten 25, 26 der Stirnfläche 12 an den Trennsteg 34 bzw. den Anschlußleiter 35 annähert. Dies ist darauf zurückzuführen, daß diesen Kanten 25, 26 Streufelder voraus- bzw. nachlaufen, von denen um so grössere Anteile in das benachbarte, von der Stirnfläche 12 an dieser Stelle nicht überdeckte Flächenelement 40 oder 41 übertreten je kleiner der Winkelabstand zwischen der betreffenden Endkante 25 oder 26 und dem Leiter 34 oder 35 wird.

Erstaunlicherweise ergibt sich dann, wenn man den Leiter 31 nicht, wie eben angenommen, auftrennt, sondern so, wie in Fig. 3 gezeigt vollständig schließt, zwischen den beiden Anschlußleitern 35, 36 ein Ausgangssignal $\Delta U_1$, das genau den Verlauf des eben beschriebenen Differenzsignals $\Delta W$ besitzt und gegenüber diesem nur eine verminderte Amplitude aufweist. Ebenso wie das Differenzsignal $\Delta W$ hat auch das Signal $\Delta U_1$ die Eigenschaft, daß aus ihm alle additiven Störeinflüsse eliminiert sind, die bei der zuvor geschilderten Anordnung mit aufgetrenntem äußeren Leiter 31 in die beiden Teilspannungen $W_1$ und $W_2$ gleichermaßen eingehen.

Darüber hinaus hat das an den Anschlüssen 37, 38 der Fig. 3 abgreifbare Differenzsignal $\Delta U_1$ den außerordentlich überraschenden Vorteil, daß es wesentlich weniger als das aus zwei getrennt gewonnenen Spannungen $W_1$ und $W_2$ gebildete Differenzsignal $\Delta W$ von Störgrößen beeinflußt wird. Das liegt z.B. auch daran, daß die in den geschlossenen Leiterschleifen 31, 32, 33 zwangsläufig fließenden Kurzschlußströme so-wohl linearisierend als auch insbesondere in bezug auf den Nulldurchgang symmetrierend wirken. Somit ist das Differenzsignal $\Delta U_1$ hervorragend geeignet, zur Bildung eines ersten Zwischensignals verwendet zu werden, das seinerseits gemäß der Erfindung zur Bildung des eigentlichen Meßsignals herangezogen wird.

Das zweite erfindungsgemäß zur Ableitung von Zwischensignalen erforderliche Differenzsignal $\Delta U_2$ wird mit Hilfe einer zweiten Gruppe von Flächenelementen 42, 43 gewonnen, welche die gleiche Form wie die Flächenelemente 40, 41 aufweisen und zu diesen in radialer Richtung deckungsgleich liegen, in Umfangsrichtung aber um 90° gegen diese verdreht sind. Die Flächenelemente 42, 43 der zweiten Gruppe werden in radialer Richtung von dem äußeren kreisförmigen Leiter 31 und dem inneren kreisförmigen Leiter 33 begrenzt und sind voneinander durch den Leiterabschnitt 44, der die beiden kreisförmigen Leiter 31 und 33 elektrisch leitend miteinander verbindet, sowie den Anschlußleiter 45 getrennt, der sich vom inneren kreisförmigen Leiter 33, mit dem er in elektrisch leitender Verbindung steht, radial nach außen über den äußeren kreisförmigen Leiter 31 hinaus erstreckt, von dem er im Überkreuzungspunkt elektrisch isoliert ist. Der Anschlußleiter 45 liegt dem Trennsteg 44 diametral gegenüber. Zunächst deckungsgleich mit ihm erstreckt sich ein Anschlußleiter 46, der mit dem äußeren kreisförmigen Leiter 31 in elektrisch leitender Verbindung steht. Radial etwas weiter außen laufen die beiden Anschlußleiter 45, 46 nicht mehr deckungsgleich und enden in Anschlußkontakten 47, 48, an denen die zweite Differenzspannung $\Delta U_2$ abgegriffen werden kann.

Da die beiden Gruppen von Flächenelementen 40, 41 und 42, 43 einen identischen Aufbau besitzen, gilt für die Spannung $\Delta U_2$ das, was oben für $\Delta U_1$ gesagt wurde, in gleicher Weise. Der einzige Unterschied besteht darin, daß $\Delta U_2$ gegen $\Delta U_1$ ebenfalls um 90° verschoben ist.

Die beiden Differenzsignale $\Delta U_1$ und $\Delta U_2$ werden erfindungsgemäß zur Bildung von Zwischensignalen herangezogen, aus denen das eigentliche Meßsignal als Quotient gebildet wird. Solche Zwischensignale können beispielsweise die Differenzsignale $\Delta U_1$, $\Delta U_2$ selbst sein, was allerdings einen nichtlinearen Verlauf des so gebildeten Meßsignals $\Delta U_1/\Delta U_2$ zur Folge hätte. Vorzugsweise dienen daher als Zwischensignale die Differenz $\Delta U_1$-$\Delta U_2$ und die Summe $\Delta U_1$+$\Delta U_2$, was zu einem Meßsignal der Form

$$\frac{\Delta U_1 - \Delta U_2}{\Delta U_1 + \Delta U_2} \tag{1}$$

führt, das wegen der Konstanz des Nenners einen linearen Verlauf aufweist. Für den Fall, daß $\Delta U_1 = \Delta U_2$ wird, tritt hier überdies keine Division durch Nullauf. Das so gebildete Meßsignal ist nicht nur frei von additiven sondern auch von multiplikativen Störgrößen und besitzt eine Meßgenauigkeit, Kennlinientreue und Kennliniensymmetrie, wie sie bisher nicht erreicht werden konnten.

Allerdings ist der extrem genau lineare Verlauf der Differenzsignale $\Delta U_1$ und $\Delta U_2$ mit dem in Fig. 3 gezeigten Ausführungsbeispiel nur für einen Winkelbereich < 360° erreichbar.

Wie oben für das Signal $\Delta W = W_1 - W_2$ bereits angedeutet, ergeben sich nämlich auch für die Signale $\Delta U_1$ und $\Delta U_2$ zu den Trennstegen 34, 44 bzw. den Anschlußleitern 35, 45 symmetrisch liegende Winkelbereiche $2\alpha$, in denen zwar ein Signal $\Delta U_1$ bzw. $\Delta U_2$ gewonnen werden kann, dessen Verlauf aber von der Linearität um so mehr abweicht, je näher sich eine der Endkanten 25, 26 an einen der Leiter 33, 44 bzw. 35, 45 annähert. Diese für die Gewinnung eines linearen Meßsignals nicht mehr verwendbaren Winkelbereiche $2\alpha$ müssen um so größer gewählt werden, je höher die Anforderungen an die Linearität sind. Sind diese Anforderungen gering, so kann beispielsweise $\alpha = 15°$ durchaus ausreichend sein, während für hohe Genauigkeiten $\alpha = 30°$ oder sogar $\alpha = 45°$ gewählt werden muß.

Allgemein gilt, daß bei der Anordnung nach Fig. 3 vier voneinander getrennte Meßbereiche von jeweils 90° - $2\alpha$ zur Verfügung stehen, von denen jeder bei geringen Linearitätsanforderungen 60° überdeckt. Bei sehr hoher Genauigkeit kann nur noch der Meßbereich verwendet werden, der sich im Uhrzeigersinn von der gestrichelten Linie 49a zur gestrichelten Linie 49b erstreckt, was in vielen Fällen ausreichend ist.

Will man bei hoher Genauigkeit größere Meßwinkel überdecken, so können drei oder vier der in Fig. 3 gezeigten Gruppen von Flächenelemente vorgesehen werden, die dann um jeweils 60° bzw. 45° gegeneinander verdreht angeordnet sind. Es stehen dann drei oder vier Differenzsignale zur Verfügung, von denen aber zu einem gegebenen Zeitpunkt immer nur zwei zu der erläuterten Zwischensignal- und Quotientenbildung herangezogen werden. Es sind dies dann jeweils die beiden Differenzsignale der Flächenelementegruppen, von deren Trennstegen bzw. Ausgangsleitern die Endkanten 25, 26 der Durchtrittsfläche zum betrachteten Zeitpunkt die größeren Winkelabstände aufweisen.

Mit drei derartigen Flächenelementgruppen, von denen jede über einen Meßbereich von 120° - $2\alpha$ ein ausreichend lineares Differenzsignal liefert, läßt sich durch entsprechendes Umschalten der Gesamtbereich von 360° überdecken, wenn $\alpha$ nicht größer als 30° sein muß. Bei diesen Umschaltvorgängen ist die durch die geschlossenen Leiterschleifen erzielte absolute Symmetrie, die durch einfache Differenzbildung nicht erreicht werden kann, von besonderem Vorteil.

Wird eine Linearität gefordert, für die $\alpha$ gleich 45° sein muß, so kann dies mit vier um jeweils 45° gegeneinander versetzten Flächenelementgruppen der beschriebenen Art erreicht werden. Allerdings lassen sich diese fest verdrahteten Lösungen nicht mehr mit zwei Leitbahnebenen realisieren. Je größer die Anzahl der verwendeten Leitbahnebenen ist, um so größere Probleme ergeben sich aber mit der Justiergenauigkeit, mit der die Flächenelemente der verschiedenen Gruppen in radialer Richtung zur Deckung gebracht werden müssen.

Um diese Schwierigkeiten zu vermeiden, kann die in Fig. 4 dargestellte Lösung gewählt werden, die zur Bildung von vier Gruppen von je zwei Flächenelementen, von denen sich jedes über 180° erstreckt, mit zwei Leitbahnebenen auskommt. Zu diesem Zweck umfaßt die Meßspulenanordnung 50 neben einem geschlossenen kreisförmigen äußeren Leiter 31, der hier mehrfach die Leitbahnebene wechselt, und zwei deckungsgleich hintereinander angeordneten geschlossenen kreisförmigen inneren Leitern 32, 33 (die ebenso wie der Leiter 31 in Dimensionierung und Anordnung genau den oben beschriebenen, mit den gleichen Bezugszeichen versehenen Leitern entsprechen) acht radial verlaufende Leiterabschnitte 51 bis 58, die mit Winkelabständen von jeweils 45° so angeordnet sind, daß sie einander paarweise diametral gegenüberliegen.

Die Leiterabschnitte 51 bis 58 sind alternierend mit dem einen bzw. dem anderen der beiden inneren kreisförmigen Leiter 32 bzw. 33 elektrisch leitend verbunden. An den Punkten, an denen sie den äußeren kreisförmigen Leiter 31 überkreuzen, sind sie von diesem aber elektrisch isoliert. Zu jedem der Leiterabschnitte 51 bis 58 verläuft ein sich zunächst ebenfalls radial erstreckender, mit dem äußeren kreisförmigen Leiter 31 elektrisch leitend verbundener Leiterabschnitt 61 bis 68 in der jeweils anderen Leitbahnebene deckungsgleich nach außen. In einem radialen Abstand, in dem die radialen Streufelder im wesentlichen abgeklungen sind, lösen sich die Leiterabschnitte 61 bis 68 aus dem deckungsgleichen Verlauf mit ihren zugehörigen Leiterabschnitten 51 bis 58. Die Leiterabschnitte 61 bis 64 münden mit ihren zugehörigen Leiterabschnitten 51 bis 54 in Anschlußkontaktpaaren 70 bis 73, während die Leiterabschnitte 65 bis 68 mit ihren zugehörigen Leiterabschnitten 55 bis 68 über einen steuerbaren EIN/AUS-Schalter 74 bis 77 in Verbindung stehen.

Während also die Leiterabschnittspaare 51, 61 bis 54, 64 Anschlußleiter bilden, wie sie bereits im Zusammenhang mit Fig. 3 beschrieben wurden, bilden die ihnen jeweils diametral gegenüberliegenden Leiterabschnittspaare 55, 65 bis 58, 68 schaltbare Trennstege, die dann, wenn ihr zugehöriger EIN/AUS-Schalter 74 bis 77 geschlossen ist, die in Umfangsrichtung unmittelbar an sie anschließenden Flächenelementsbereiche voneinander trennen, so daß diese zu verschiedenen Flächenelementen derselben Gruppe gehören. Bei geöffnetem Schalter 74 bis 77 ist der jeweils zugehörige Leiterabschnitt 55 bis 58 ohne Trennsteg-Wirkung, so daß an ihn anschließende Flächenelementsbereiche demselben Flächenelement angehören.

Im Betrieb sind immer zwei der vier EIN/AUS-Schalter 55 bis 58 geschlossen, während die beiden anderen geöffnet sind. Welche Schalter geöffnet bzw. geschlossen sind, hängt von der jeweiligen Stellung und Bewegungsrichtung der durch die Stirnfläche 12 definierten Durchtrittsfläche ab.

Nimint man z.B. an, daß sich die Durchtrittsfläche aus der in Fig. 4 gezeigten Stellung entgegen dem Uhrzeigersinn weiterbewegen soll, so sind die EIN/AUS-Schalter 75 und 76 geschlossen und die ihnen zugeordneten Trennstege 56, 57 wirksam. Da jeder dieser Trennstege mit dem äußeren kreisförmigen Leiter 31 und einem der beiden inneren kreisförmigen Leiter 32 bis 33 in elektrisch leitender Verbindung steht, werden zwei Gruppen von Flächenelementen gebildet, die radial zur Deckung kommen und in Verschieberichtung um 45° gegeneinander versetzt sind.

Die eine Gruppe von Flächenelementen umfaßt die beiden jeweils 180° überdeckenden, d.h. halbkreisringförmigen Flächenelemente, die sich vom Trennsteg 56 zum Anschlußleiterpaar 52, 62 erstrecken, während die andere Gruppe die halbkreisförmigen Flächenelemente umfaßt, die vom Trennsteg 57 bis zum Anschlußleiterpaar 53, 63 verlaufen. An den zugehörigen Anschlußkontaktpaaren 71 bzw. 72 werden die Differenzspannungen $\Delta U_1$ und $\Delta U_2$ für den Bewegungsbereich von 45° abgegriffen, in dem sich die Endkante 25 der Stirnfläche 12 aus der gezeigten Stellung bis zu dem in dieser Zeit funktionslosen Leiterabschnitt 55 bewegt, während die gegenüberliegende Endkante 26 bis zu dem in dieser Zeit ebenfalls funnktionslosen Leiterabschnitt 51 läuft.

In der einen Endstellung der eben beschriebenen, sich über 45° erstreckenden Drehbewegung haben die Endkanten 25, 26 von dem jeweils nächstgelegenen "funktionierenden" Trennsteg 56 bzw. 57 einen Winkelabstand von 90° bzw. 45°. Diese Abstände betragen in der anderen Endstellung 90° bzw. 45°, unterschreiten also niemals den Wert von 45°.

Bewegt sich die Endkante 25 der Stirnfläche 12 weiter entgegen dem Uhrzeigersinn über den "funktionslosen" Leiterabschnitt 55 hinaus, so werden sofort der Schalter 75 geöffnet und der Schalter 77 geschlossen. Ersteres ist erforderlich, weil sonst die Endkante 25 den Winkelabstand von 45° zum nächstgelegenen "aktiven" Trennsteg unterschreiten würde; letzteres ist möglich, weil der Winkelabstand der Endkante 26 vom neu eingeschalteten Trennsteg 58 größer als 45° wird. Bei dieser neuen Schalterstellung werden die Differenzsignale an den Anschlußkontaktpaaren 72 und 73 abgegriffen.

Bei einer weitergehenden Drehung können entsprechende Umschaltungen sowohl der "aktiven" Trennstege als auch der zum Abgreifen der Differenzsignale $\Delta U_1$ und $\Delta U_2$ benutzten Anschlußkontaktpaare vorgeommen werden, und es ist möglich, über 360° hinweggehende Drehbewegungen in beiden Richtungen messend zu verfolgen, ohne daß der hier angenommene kritische Randabstandswinkel $\alpha = 45°$ unterschritten wird.

Es bleibt dabei das Prinzip erhalten, daß zwei Differenzsignale an zwei Gruppen von Flächenelementen abgegriffen werden, wobei die Flächenelemente einer Gruppe sich jeweils zu einem Vollkreisring ergänzen. Sie sind einerseits durch einen radial verlaufenden Trennsteg, der den inneren und den äußeren kreisförmigen Leiter miteinander verbindet, und andererseits durch ein diametral gegenüberliegendes Anschlußleiterpaar voneinander getrennt, an dem die jeweilige Differenzspannung anliegt. Die beiden so gebildeten Gruppen sind um 45° gegeneinander versetzt und liefern zwei gegeneinander "phasenverschobene" Differenzsignale, die in der oben beschriebenen Weise zur Zwischensignal- und Quotientenbildung verwendet werden.

Der wesentliche Unterschied zu den in Verbindung mit Fig. 3 geschilderten Ausführungsformen liegt darin, daß die Winkelstellung der Flächenelementgruppen nicht unveränderlich festgelegt ist. Vielmehr können sich die Flächenelementgruppen hier durch Öffnen und Schließen der EIN/AUS-Schalter 74 bis 77 mit der Durchtrittsfläche "mitbewegen". Diese "Mitbewegung" wird so gesteuert, daß der Winkelabstand zwischen einer der Endkanten 25, 26 und dem nächstgelegenen wirksamen Trennsteg bzw. dem nächstgelegenen wirksamen Anschlußleiter niemals kleiner 45° wird. Man hat hier also eine Meßspulenanordnung 50 mit zwei Leitbahnebenen, die den diesem großen Winkel $\alpha$ entsprechenden hohen Linearitäts- und Symmetrieanforderungen bezüglich des Meßsignals genügt.

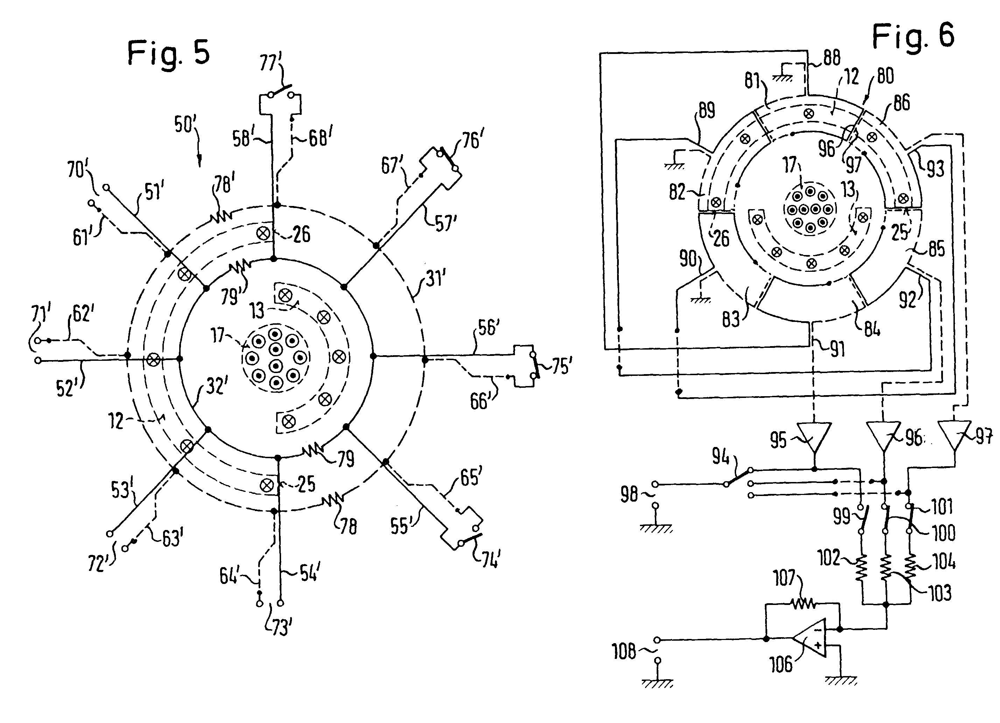

Die beiden zur Quotientenbildung erforderlichen Differenzsignale müssen nicht zu jedem Zeitpunkt gleichzeitig abgegriffen und der weiteren Verarbeitung zugeführt werden. Sie können vielmehr auch alternierend nacheinander abgegriffen und zunächst einkanalig weiterverarbeitet werden. Das eine der so gewonnenen abgeleiteten Signale wird dann immer so lange zwischengespeichert, bis das jeweils andere Signal in der gleichen Form zur gemeinsamen Weiterverarbeitung zur Verfügung steht. Eine hierfür geeignete in Fig. 5 gezeigte Meßspulenaanordnung 50' bietet den Vorteil, daß der eine der beiden inneren kreisförmigen Leiter, beispielsweise der Leiter 33 weggelassen werden kann. Mit dem verbleibenden inneren, kreisförmigen Leiter 32' sind dann alle Leiterabschnitte 51' bis 58', also insbesondere auch die Leiterabschnitte 52', 54', 56' und 58' verbunden. Die Leiterabschnitte 51' bis 58' liegen dabei mit dem kreisförmigen Leiter 32' in der gleichen Leitbahnebene, während der äußere kreisförmige Leiter 31' in der anderen Leitbahnebene liegt. Hierdurch ergibt sich ein besonders einfacher Aufbau.

Bei etwas geringeren Anforderungen genügt es, nur drei schaltbare Trennstege mit Winkelabständen von 60° und drei jeweils diametral gegenüberliegende Anschlußleiterpaare vorzusehen. Bei einer solchen Anordnung, die ebenfalls nur zwei Leitbahnebenen und eine entsprechend geringere Zahl von Schaltern benötigt, läßt sich dann ein Randabstand $\alpha = 30°$ einhalten.

Die in den Fig. 4 und 5 gezeigten Anordnungen bieten wegen der stabilisierenden Wirkung der in den kreisförmigen Leitern 31, 32 und 33 bzw. 31' und 32' fließenden Kurzschlußströme bezüglich der Monotonie des Meßsignals Vorteile. Allerdings müssen hier die Bahnwiderstände in den Meßspulenwindungen, die sich jeweils zu einer Gruppe ergänzende Flächenelemente umschließen, wegen dieser Ströme mit großer Genauigkeit gleich sein. Dies kann entweder durch eine sehr genaue Ausführung der die Meßspulen bildenden gedruckten Schaltung hinsichtlich Leitbahnbreite und Leitbahndicke bzw. einen nachträglichen Abgleich beispielsweise durch Verringerung der Breite von zu niederohmigen Leitbahnbereichen in jedem Segment erfolgen. Dies ist allerdings sehr aufwendig. Wesentlich vorteilhafter ist es, wie in Fig. 5 gezeigt, die kreisförmigen geschlossenen Leiter 31', 32' von vornherein mit jeweils zwei einander diametral gegenüberliegenden, in der Fig. 5 übertrieben groß dargestellten Unterbrechungen zu versehen und jede dieser Unterbrechungen mit einem Widerstand 78, 78' bzw. 79, 79' zu überbrücken. Die innerhalb eines Leiters 31' bzw. 32' miteinander in Reihe liegenden Widerstände 78, 78' bzw. 79, 79' müssen dann mit der gewünschten Meßgenauigkeit gleich große Widerstandswerte besitzen, die im Vergleich zu den Widerstandsdifferenzen der Leitbahnen groß, pro 180° aber nur einmal vorhanden sein müssen. Liegen die Unterschiede der Leitbahnwiderstandswerte beispielsweise bei 1m $\Omega$ bis 2m $\Omega$ , so genügt es für eine Genauigkeit von 1:10$^4$ für die Widerstände 78, 78', 79, 79' einen Widerstandswert von 10 $\Omega$ bis 20 $\Omega$ zu wählen. Dabei kommt es auf den exakten Widerstandswert nicht an. Nur die jeweiligen Paare von Widerständen 78, 78' bzw. 79, 79' müssen auf 1:10$^4$ genau übereinstimmende Widerstandswerte besitzen. Die Widerstände 78, 78', die die einander diametral gegenüberliegenden Unterbrechungen des äußeren kreisförmigen Leiters 31' überbrücken, können anders als in Fig. 5 dargestellt in anderen Spulensegmenten liegen als die Widerstände 79, 79' des inneren kreisförmigen Leiters 32'. Die in Fig. 5 gezeigte Anordnung wird jedoch bevorzugt, weil sie es erlaubt, die Anschlüsse der nicht dargestellten, den Bereich der Stirnfläche 17 konzentrisch umgebenden Erregerspule, die auf der gleichen Leiterplatte wie die Meßspulen ebenfalls als gedruckte Schaltung ausgebildet werden kann, unter den Widerständen hindurch ohne Ebenenwechsel nach außen zu führen.

Um den eben geschilderten Aufwand zu vermeiden, kann es günstig sein, Meßspulenanordnungen zu verwenden, bei denen in den Meßspulenwicklungen keine nennenswerten Ströme fließen. In Fig. 6 ist eine solche Meßspulenanordnung 80 wiedergegeben, die sechs teilkreisringförmige Flächenelemente 81 bis 86 umfaßt, von denen sich jedes über einen Winkel von 60° erstreckt, und die gleiche Innen- und Außenradien besitzen, die etwas kleiner bzw. etwas größer als der Innen- bzw. Außenradius der Stirnfläche 12 gewählt sind, die auch hier die Durchtrittsfläche definiert.

Die Flächenelemente 81 bis 86 sind aneinander anschließend so angeordnet, daß sie sich zu einem Vollkreisring ergänzen, der zur Drehachse konzentrisch liegt. Jedes Flächenelement 81 bis 86 ist von einer eigenen Meßspulenwindung mit einem eigenen Anschlußleiterpaar 88 bis 93 umschlossen. Jede Meßspulenwindung liegt teilweise in der oberen und teilweise in der unteren Leitbahnebene, so daß die gemeinsamen Randbereiche von jeweils zwei in Umfangsrichtung aneinander anschließenden Flächenelementen, beispielsweise der Flächenelemente 81 und 86 von zwei radial verlaufenden Randleitern 96, 97 gebildet werden, die zwar in Fig. 6 nebeneinander gezeichnet sind, in Wirklichkeit aber genau deckungsgleich übereinander liegen. Es sei ausdrücklich darauf hingewiesen, daß dies nicht nur für das exemplarisch herausgegriffene Randleiterpaar 96, 97 sondern in gleicher Weise für alle anderen Randleiterpaare gilt.

Von den Anschlußleiterpaaren 88, 89 und 90 der Meßspulenwindungen der Flächenelemente 81, 82, 83 ist jeweils ein Anschlußleiter mit der Systemmasse verbunden, während der andere mit einem der Anschlußleiter der Meßspulenwindung des jeweils diametral gegenüberliegenden Flächenelementes 84, 85 bzw. 86 verbunden ist. Diese Verbindung ist so gewählt, daß die jeweils miteinander verdrahteten Meßspulenwindungen gegensinnig durchlaufen werden, wenn man vom betreffenden Masseanschluß zum "freien" Anschluß der Meßspulenwindungen der Flächenelemente 84, 85, 86 geht.

Jeder dieser "freien" Anschlüsse ist mit einem von drei Impedanzwandlern 95, 95a, 95b verbunden, die auch gleichzeitig als Vorverstärker dienen können. Die Ausgangsleitungen dieser Impedanzwandler 95, 95a, 95b führen einerseits auf drei Eingangskontakte eines steuerbaren Schalters 94, der drei verschiedene Stellungen einnehmen kann, in denen er jeweils einen anderen der drei Impedanzwandlerausgänge mit einem Ausgangsanschlußpaar 98 verbindet. Andererseits führen die Ausgangsleitungen der Impedanzleiter 95 bis 95b auf drei steuerbare EIN/ AUS-Schalter 99, 100, 101, von denen jeder mit einem Widerstand 102, 103, 104 in Reihe liegt. Wegen des hochohmigen Abgriffs durch die Impedanzwandler 95 bis 95b fließen in den Meßspulenwindungen nur äußerst kleine Ströme, sodaß unterschiedlich kleine Widerstandswerte in den Meßspulenschleifen das Meßergebnis nicht beeinflussen.

Die den Schaltern 99 bis 101 gegenüberliegenden Anschlüsse der Widerstände 102 bis 104 sind miteinander verbunden und an den "Minus"-Eingang eines Differenzverstärkers 106 gelegt, dessen Ausgang über einen Widerstand 107 auf den "Minus"-Eingang rückgekoppelt und darüber hinaus mit einem Ausgangsanschlußpaar 108 verbunden ist. Der "Plus"-Eingang des Operationsverstärkers 106 liegt an der Systemmasse.

Auch bei dieser Ausführungsform werden für jede Winkelstellung der Durchtrittsfläche zwei winkelmäßig gegeneinander versetzte Gruppen von Flächenelementen gebildet, deren Randleiter von den Endkanten 25, 26 der Stirnfläche 12 einen Winkelabstand aufweisen, der einen kritischen Winkel $\alpha$ niemals unterschreitet. Bei der dargestellten Variante mit sechs Flächenelementen hat $\alpha$ den Wert von 30°. Mit entsprechend aufgebauten, angeordneten und verschalteten acht Flächenelementen kann auch hier ein Wert für $\alpha$ von 45° erzielt werden.

Bei der in Fig. 6 gezeigten Ausführungsform umfaßt bei der dargestellten Stellung der Durchtrittsfläche die eine Gruppe einerseits die sich zu einem Halbkreisring ergänzenden Flächenelemente 81, 82 und 83 und andererseits die den komplementären Halbkreisring bildenden Flächenelemente 84, 85 und 86, und die andere Gruppe die sich zu einem Halbkreisring ergänzenden Flächenelemente 82, 83, 84 und die den komplementären Halbkreisring bildenden Flächenelemente 85, 86, 81.

Betrachtet man die Ausgangsspannungen der Flächenelemente der beiden Gruppen zunächst unabhängig von der in Fig. 6 gezeigten Verdrahtung, so kann man aus ihnen die Differenzspannungen

$$\Delta U_1 = U_{81} + U_{82} + U_{83} - (U_{84} + U_{85} + U_{86})$$

und

$$\Delta U_2 - U_{82} + U_{83} + U_{84} - (U_{85} + U_{86} + U_{81})$$

bilden. Zwar befinden sich die Endkanten 25 und 26 der Stirnfläche 12 direkt an den Rändern zwischen den Flächenelementen 85, 86 bzw. 82, 83. Da aber in die obigen Differenzspannungen nur die Summen der Spannungen eingehen, die von den Meßspulenwicklungen dieser Flächenelemente erzeugt werden, bleiben hier auftretende Streufeldeffekte ohne Einfluß. Die bei dieser Betrachtung wirksamen Randbereiche sind die zwischen den Flächenelementen 83, 84 und 86, 81 (erste Gruppe) bzw. zwischen den Flächenelementen 84, 85 und 81, 82 (zweite Gruppe). Von diesen vier Randbereichen haben die Endkanten 25, 26 in der gezeigten Stellung aber mindestens einen Winkelabstand von 60°, so daß sie sich sowohl im Uhrzeigersinn als auch in entgegengesetzter Richtung um 30° verschieben können, ohne den Mindestwinkelabstand $\alpha= 30°$ zu unterschreiten. Es ist also für die oben aufgeführten Kombinationen von Flächenelementen ein Bewegungsbereich von 60° gegeben, in dem die Linearität der beiden Differenzsignale $\Delta U_1$ und $\Delta U_2$ den einem Mindestwinkelabstand $\alpha = 30°$ entsprechenden Anforderungen genügt.

Bildet man nun den Quotienten

$$\frac{\Delta U_1 + \Delta U_2}{\Delta U_1 - \Delta U_2} \tag{2}$$

so erhält man nach Wegfall der identischen Spannungen mit entgegengesetztem Vorzeichen den Ausdruck

$$\frac{2U_{82} + 2U_{83} - 2U_{85} - 2U_{86}}{2U_{81} - 2U_{84}} = \frac{(U_{82} - U_{85}) + (U_{83} - U_{86})}{(U_{81} - U_{84})} \tag{3}$$

Es sind genau die in dem letzten Ausdruck auftretenden drei Spannungsdifferenzen, die durch die in Fig. 6 gezeigte feste Verdrahtung gebildet werden und an den Ausgängen der Impedanzwandler 95 bis 95b zur Verfügung stehen. Es läßt sich zeigen, daß für jede beliebige Stellung der Durchtrittsfläche aus diesen drei Spannungsdifferenzen $U_{82} - U_{85}$, $U_{83} - U_{86}$, $U_{81} - U_{84}$ Zwischensignale mit der erforderlichen Linearität gebildet werden können, aus denen verschiedene, das Meßsignal darstellende Quotienten erzeugt werden, bei denen jeweils zwei andere Spannungsdifferenzen das im Zähler stehende Zwischensignal und die dritte Spannungsdifferenz das im Nenner stehende Zwischensignal bilden.

Bei der gezeigten Stellung der Schalter 94 und 99 bis 101 wird die Spannungsdifferenz $U_{81} - U_{84}$, die das eine Zwischensignal bildet, am Ausgangsanschlußpaar 98 zur Verfügung gestellt, und werden die Spannungsdifferenzen $U_{82} - U_{84}$ und $U_{83} - U_{86}$ über das Widerstandsnetzwerk 102 bis 108 und den Differenzverstärker 106 mit Rückkopplungswiderstand widerstand 107 summiert, so daß das in Gleichung (3) im Zähler stehende Zwischensignal am Ausgangsanschlußpaar 108 abgegriffen werden kann. Die Verstärkungsfaktoren der Impedanzwandler 95 bis 95b und des Differenzverstärkers werden so aufeinander abgestimmt, daß aus den Zwischensignalen an den Ausgangsanschlußpaaren 98 und 108 sofort durch eine nicht dargestellte Schaltungsanordnung der rechte Quotient aus Gleichung (3) gebildet werden kann.

Durch entsprechende Ansteuerung der Schalter 94 und 99 bis 100 läßt sich also auch hier ein "Mitlaufen" der Flächenelementegruppen mit der Durchtrittsfläche simulieren, wie es oben unter Bezugnahme auf die Fig. 4 und 5 beschrieben wurde. Das aus den oben genannten Zwischensignalen gebildete Meßsignal hat auch hier die Eigenschaft, daß aus ihm additive Störgrößen wegen der Differenzbildungen eliminiert sind und durch die Quotientenbildung der Einfluß der multiplikativen Störungen beseitigt wird.

Man sieht, daß die den Nenner des in Gleichung (3) rechts stehenden Quotienten bildende Spannungsdifferenz $U_{81} - U_{84}$ bei einer Verschiebung der Durchtrittsfläche aus der gezeigten Stellung um 30° in der einen oder anderen Richtung konstant bleibt, während sich $U_{82} - U_{85}$ und $U_{83} - U_{86}$ gegensinnig linear verändern. Dadurch erhält man wieder ein Meßsignal mit dem gewünschten linearen Verlauf. Die Meßspulenanordnung 80 zeichnet sich dadurch aus, daß sie ein Minimum an steuerbaren Schaltern benötigt und ein Bit mehr Auflösung bringt.

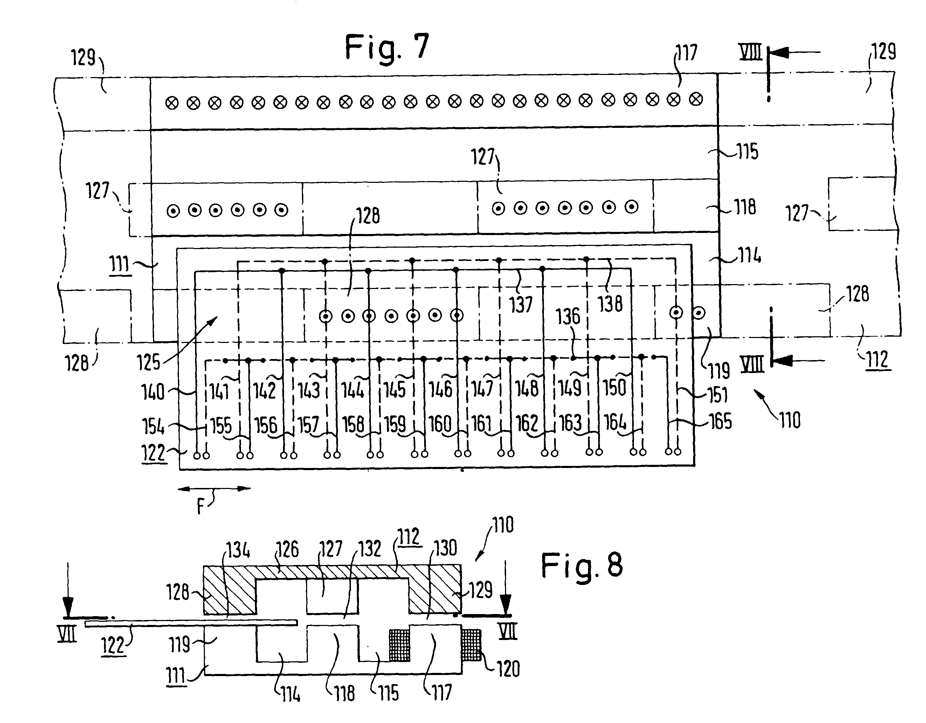

In den Fig. 7 und 8 ist ein induktiver Lineargeber 110 dargestellt, der eine Flußführungsvorrichtung aus ferromagnetischem Material umfaßt, die aus einem Kern 111 und einem Joch 112 besteht.

Der Kern 111 besitzt die Form eines länglichen, rechteckigen Quaders, in dessen eine Flachseite zwei sich parallel zu den Längskanten über die gesamte Länge des Kerns erstreckende Nuten 114, 115 eingearbeitet sind, die senkrecht nach unten über etwa vier Fünftel der Dicke des Kerns 111 in diesen hineinreichen. Durch die Nuten 114, 115 erhält der Kern 111 einen E-förmigen Querschnitt mit drei Schenkeln 117, 118, 119, die in Fig. 8 nach oben weisen und alle in etwa die gleiche Breite besitzen, die ihrerseits in etwa gleich der Breite einer jeden der Nuten 114, 115 ist. Um den einen äußeren Schenkel 117 ist eine Erregerspule 120 gewickelt, die in Fig. 7 weggelassen ist.

Auf der Oberseite des anderen äußeren Schenkels 119 ist eine Trägerplatine 122 mit einer Meßspulenanordnung 125 montiert, die quer die Oberseite des Schenkels 119 und den größeren Teil der Nut 114 überdeckt, die die Schemkel 118 und 119 voneinander trennt.

Der Kern 111 ist an dem einen der beiden (nicht dargestellten) Körper montiert, deren gegenseitige Stellung bezw. Bewegung messend erfaßt werden soll.

Am anderen der beiden Körper ist das Joch 112 befestigt, dessen Umrisse in Fig. 7 durch strichpunktierte Linien dargestellt sind.

Die Bewegung zwischen Kern 111 und Joch 112 erfolgt in Richtung des Doppelpfeiles F in Fig. 7 und das Joch 112 besitzt in dieser Richtung eine erhebliche Länge, die die maximal messend erfaßbare Bewegungsweite definiert.

Das Joch 112 hat im wesentlichen die Form einer in Bewegungsrichtung langgestreckten rechteckigen Platte 126, deren Breite quer zur Bewegungsrichtung gleich der Breite des Kerns 111 ist. Von der Jochplatte 126 stehen zum Kern 111 hin quaderförmige Vorsprünge 127, 128 und 129 ab.

Der Vorsprung 129 erstreckt sich über die gesamte Länge des Joches 112 und hat quer zur Bewegungsrichtung eine Breite, die gleich der Breite des äußeren Schenkels 117 des Kerns 111 ist. Unabhängig von der Stellung des Jochs 112 bezüglich des Kerns 111 liegt also immer ein Teil der dem Kern zugewandten Oberfläche des Vorsprunges 129 der dem Joch zugewandten Oberfläche des Schenkels 117 des Kerns 111 deckungsgleich gegenüber. Diese beiden Oberflächen schließen zwischen sich einen Spalt 130 ein, der lediglich dazu dient, eine reibungsfreie Bewegung zwischen Kern 111 und Joch 112 zu ermöglichen. Zur Verminderung von Streufeldern sollte die Weite dieses Spaltes 130 so klein wie irgend möglich gehalten werden.

Es ist eine Vielzahl von gleich dimensionierten Vorsprüngen 127 vorgesehen, die mit ihren Längsrichtungen parallel zur Bewegungsrichtung so in Reihe hintereinander angeordnet sind, daß sie in Bewegungsrichtung miteinander fluchten. Ihre Abstände in Bewegungsrichtung sind gleich ihrer Länge und diese ist etwas größer als ein Drittel der Länge der Meßspulenanordnung 125 in dieser Richtung.

Die Reihe der Vorsprünge 127 ist quer zur Bewegungsrichtung so angeordnet, daß die dem Kern 111 zugewandten Oberflächen der Vorsprünge 127 der dem Joch zugewandten Oberfläche des mittleren Schenkels 118 des Kerns 111 unter Bildung von Spalten 132 in einem Bereich gegenüberliegen, in dem sich keine Teile der Meßspulenanordnung 125 befinden.

Die Vorsprünge 128 sind genauso dimensioniert und ausgerichtet wie die Vorsprünge 127, in Bewegungsrichtung aber gegen diese "auf Lücke" versetzt, so daß jeder Abstand zwischen zwei Vorsprüngen 127 durch einen Vorsprung 128 "überbrückt" wird und umgekehrt.

Quer zur Bewegungsrichtung ist die Reihe der Vorsprünge 128 so angeordnet, daß die dem Kern 111 zugewandten Oberflächen der Vorsprünge 128 der dem Joch zugewandten Oberfläche des äußeren Schenkels 119 des Kerns 111 unter Bildung von Spalten 134 in einem Bereich gegenüberliegen, in dem die Meßspulenanordnung 125 positioniert ist.

Die Flußführungsvorrichtung führt somit den von der Erregerspule 120 ausgehenden Magnetfluß auf mehreren ringförmig geschlossenen Meßwegen und mehreren ringförmig geschlossenen Ausgleichswegen.

Beide Arten von Wegen verlaufen zunächst vom äußeren Schenkel 117 über den Spalt 130, durch den Vorsprung 129 und die Platte 126. In dieser findet dann eine Aufteilung statt und die Ausgleichswege erstrecken sich durch diejenigen Vorsprünge 127 nach unten, die zum betrachteten Zeitpunkt der Oberseite des mittleren Schenkels 118 gegenüberstehen, über die dazwischenliegenden Spalte 132 hinweg, durch den mittleren Schenkel 118 und unter der Nut 115 hindurch zurück zum äußeren Schenkel 117.

Die Meßwege verlaufen demgegenüber durch die Vorsprünge 128, die zum betrachteten Zeitpunkt der Oberseite des äusseren Schenkels 119 gegenüberstehen, über die dazwischenliegenden Spalte 134, in denen sie die Meßspulenanordnung 125 durchsetzen, und dann unter den Nuten 114, 115 hindurch zurück zum äußeren Schenkel 117. Wesentlich ist dabei, daß wegen der oben beschriebenen Dimensionierung der Nuten 114, 115, der Schenkel 117, 118, 119 und der Vorsprünge 127, 128, 129 der magnetische Widerstand aller Meßwege gleich dem magnetischen Widerstand aller Ausgleichswege ist, und die Summe der magnetischen Widerstände, die die Spalte 132, 134 bilden, in etwa gleich dem magnetischen Widerstand des Spaltes 130 ist.

Die Meßspulenanordnung 125 in Fig. 7 umfaßt drei sich in Verschieberichtung F erstreckende, durchgehende Leiter 136, 137, 138, von denen der in Fig. 7 "untere", nämlich der Leiter 136 mehrfach zwischen den beiden Leitbahnebenen hin- und herwechselt und Bestandteil der Meßspulenwindungen aller Flächenelemente ist. Die beiden in Fig. 7 "oberen" durchgehenden Leiter 137 und 138 sind zwar nebeneinander gezeichnet, liegen aber tatsächlich in den Abschnitten, in denen sie zueinander parallel verlaufen, deckungsgleich übereinander. Auch sie gehören zu den Meßspulenwindungen mehrer Flächenelemente.

Senkrecht zur Verschieberichtung F erstrecken sich zwölf Begrenzungsleiter 140 bis 151, die alternierend mit einem der beiden "oberen" durchgehenden Leiter 137 bzw. 138 elektrisch leitend fest verbunden sind und sich über den "unteren" durchgehenden Leiter 136 hinaus nach "unten" erstrecken, ohne daß an den Überkreuzungspunkten eine elektrisch leitende Verbindung besteht. In Verschieberichtung besitzen die Randleiter 140 bis 151 voneinander gleich große Abstände, die jeweils gleich einem Viertel der Länge der Durchtrittsflächen 128 sind.

Ausgehend von dem in Fig. 7 "unteren" sich in Längsrichtung erstreckenden Leiter 136 verlaufen parallel zu den zwölf Begrenzungsleitern 140 bis 151 zwölf Verbindungsleiter 154 bis 165, die mit dem Leiter 136 elektrisch leitend fest verbunden sind und zumindest in der Nähe der Flächenelemente deckungsgleich mit dem jeweils zugehörigen Begrenzungsleiter 140 bis 154 verlaufen.

Jedes der acht Leiterpaare 140, 154; 141, 155; 142, 156; 143, 157 und 148, 162; 149, 163; 150, 164; 151, 165, die sich in Fig. 7 auf der linken bzw. rechten Seite der Meßspulenanordnung 125 befinden und Randleiterpaare bildet, ist mit den Anschlüssen eines nicht dargestellten steuerbaren EIN/AUS-Schalters verbunden, mit dessen Hilfe die elektrisch leitende Verbindung zwischen den beiden Leitern des betreffenden Paares hergestellt bzw. unterbrochen werden kann.

Die vier mittleren Leiterpaare 144, 158; 145, 159; 146, 160; 147, 161 bilden dagegen Anschlußleiterpaare, an denen Differenzspannungen $\Delta U_1$, $\Delta U_2$ abgegriffen werden können.

Die eben beschriebene Meßspulenanordnung 125 stellt das lineare Äquivalent zu den in Fig. 4 bzw. 5 dargestellten Meßspulenanordnungen 50 bzw. 50' für einen Drehgeber dar, wobei man sich die einander zu Vollkreisringen ergänzenden Flächenelement-Gruppen längs der schaltbaren Trennstege 54 bis 58 aufgeschnitten und geradegestreckt vorstellen kann. Aus den schaltbaren Trennstegen werden dabei schaltbare "linke" und "rechte" Randleiter 140 bis 143 und 148 bis 151.

Man hat also auch hier vier Gruppen von Flächenelementen, die um ein Viertel der Länge der Durchtrittsflächen 128 in Verschieberichtung F gegeneinander versetzt angeordnet sind. Die zu jeweils einer Gruppe gehörenden zwei Flächenelemente schließen in Verschieberichtung F unmittelbar aneinander an und ihr gemeinsamer Randbereich wird von dem jeweiligen Anschlußleiter 144 bis 147 gebildet. Wie sich aus folgender Tabelle ergibt, schließen immer drei Begrenzungsleiter jeweils zwei Flächenelemente ein, die gemeinsam eine Gruppe von Flächenelementen bilden:

|  | "Linker" Randleiter | Anschluß-Leiter | "Rechter" Randleiter |
|---|---|---|---|
| 1. Gruppe | 140 | 144 | 148 |
| 2. Gruppe | 141 | 145 | 149 |
| 3. Gruppe | 142 | 146 | 150 |
| 4. Gruppe | 143 | 147 | 151 |

Diese Anordnung ermöglicht es, so wie es im Zusammenhang mit den Fig. 4 und 5 beschrieben wurde, immer zwei der vier Gruppen von Flächenelementen durch Schließen der zugehörigen Schalter zu "aktivieren", während die jeweils beiden anderen Gruppen desaktiviert bleiben. An den Anschlußleitern der "aktivierten" Gruppe werden die für die Bildung der Zwischensignale erforderlichen Spannungsdifferenzen $\Delta U_1$ und $\Delta U_2$ abgegriffen.

Auch hier können die "aktiven" Flächenelementgruppen so mit den Durchtrittsflächen 128 "mitwandern", daß ständig ein Mindestabstand (entsprechend dem obigen Winkel $\alpha$) zwischen "linkem" und "rechtem" Rand der jeweils wirksamen Durchtrittsfläche(n) 128 und den wirksamen Randleitern der betreffenden Flächenelemente-Gruppe eingehalten wird, der je nach Größe eine gute bis sehr gute Linearität der abgegriffenen Spannungsdifferenzen $\Delta U_1$, $\Delta U_2$ und damit auch der aus ihnen gebildeten Zwischen- und Meßsignale gewährleistet.

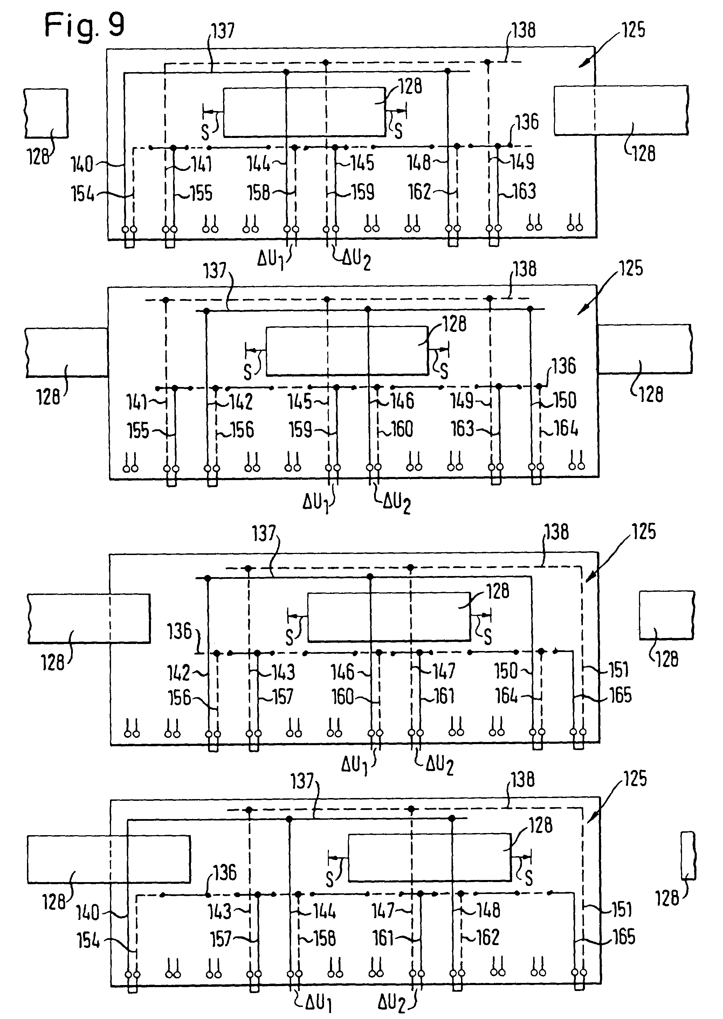

Dieses "Mitwandern" der aktiven Flächenelement-Gruppen ist in Fig. 9 dargestellt, die vier exemplarisch herausgegriffene Stellungen der Durchtrittsflächen 128 zeigt, in denen die Absolutbeträge von $\Delta U_1$, $\Delta U_2$ jeweils gleich groß sind, so daß ihre vorzeichenrichtig gebildete Differenz durch Null geht. Dabei sind für jede Stellung nur die "wirksamen" Rand- und Anschlußleiter wiedergegeben, so daß die wirksamen Flächenelement-Gruppen deutlicher zu sehen sind. Die jeweils geschlossenen EIN/AUS-Schalter sind durch einfache Leitungsverbindungen symbolisiert.

Symmetrisch zu jeder der vier "Null"-Stellungen gibt es für die mittlere Durchtrittsfläche 128 einen durch die Pfeile S angedeuteten Verschiebungsbereich nach "links" oder "rechts", bei dem zum nächstliegenden wirksamen Randleiter ein Mindestabstand nicht unterschritten wird, der hier gleich einem Viertel der Länge der Durchtrittsflächen 128 ist. Die aus jeder "Nullstellung" heraus zugänglichen Verschiebebereiche S haben zusammen eine Länge, die wieder gleich einem Viertel der Durchtrittsflächenlänge ist.

Zu jeder der in Fig. 9 gezeigten vier Null-Stellungen gibt es eine "komplementäre" Null-Stellung, in der die gezeigten drei Durchtrittsflächen 128 um eine Durchtrittsflächenlänge so verschoben sind, daß sie gerade die in Fig. 9 gezeigten Lücken zwischen zwei aufeinanderfolgenden Durchtrittsflächen überdecken. In diesen vier "komplementären" Stellungen sind die gleichen Schalter wie in Fig. 9 geschlossen und es werden die Differenzspannungen $\Delta U_1$, $\Delta U_2$ an den gleichen Anschlußleitern abgegriffen.

Es gibt also insgesamt acht Null-Stellungen, aus denen heraus ein sehr hohen Anforderungen genügender Linearitätsbereich von $\pm 1/8$ der Durchtrittsflächenlänge überstrichen werden kann. Da insgesamt eine Verschiebung um zwei Durchtrittsflächenlängen erfolgen muß, um eine volle Periodenlänge zu durchlaufen, kann der gesamte Meßbereich lückenlos überdeckt werden.

Wie schon beim entsprechenden Drehgeber ist es auch hier möglich, bei geringeren Linearitätsanforderungen nur drei jeweils um ein Drittel der Durchtrittsflächenlänge gegeneinander versetzte Gruppen von Flächenelementen vorzusehen.

Bei dem beschriebenen Lineargeber erhält man nach einer Verschiebung um zwei Durchtrittsflächenlängen wieder die gleichen Differenzsignale. Die hierdurch gegebene Unbestimmtheit kann beispielsweise dadurch beseitigt werden, daß man die Längen und/oder Abstände der Durchtrittsflächen über die gesamte abzudeckende Verschiebungsweite hinweg variiert und zusätzliche Flächenelemente vorsieht, an deren Anschlußleitern stellungsabhängige Differenzsignale in den Zeiträumen abgegriffen werden können, in denen die oben beschriebenen Flächenelemente wegen der ungleichförmigen Teilung konstante Ausgangssignale liefern.

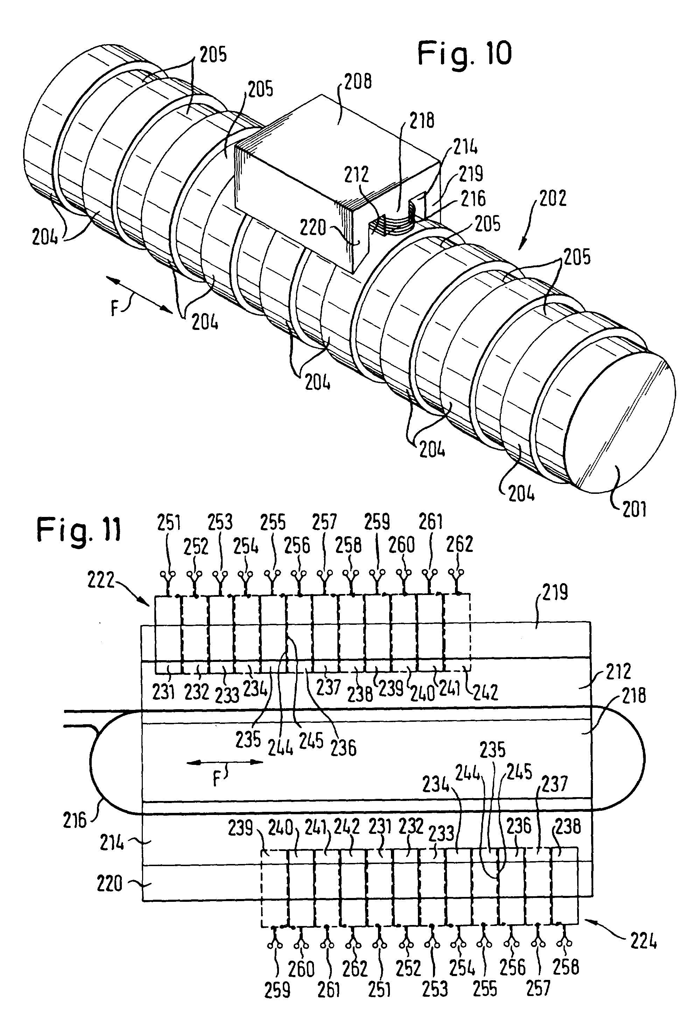

Bei der Lineargeber-Meßspulenanordnung gemäß Fig. 8 und 9 liegen die Durchgangswiderstände der Schalter, die für das "Mitwandern" der "linken" und "rechten" Randleiter betätigt werden müssen, im geschlossenen Zustand mit den Bahnwiderständen der Meßspulenwindungen in Reihe und werden von den in den Meßspulenwindungen erzeugten Kurzschlußströmen durchflossen. Damit es zu keinen Störungen der Meßergebnisse kommt, müssen daher diese Schalter Durchgangswiderstände besitzen, die möglichst klein sind und/oder nur äußerst geringe Unterschiede aufweisen. Insbesondere dann, wenn man Halbleiterschalter, wie sie derzeit angeboten werden, verwenden will, ist diese Forderung nicht oder nur mit erheblichem Kostenaufwand zu erfüllen. Um diese Schwierigkeiten zu vermeiden, ist es zweckmäßig, auch für einen Lineargeber eine dem Drehgeberbeispiel der Fig. 6 entsprechende lineare Meßspulenanordnung zu verwenden, wie sie im folgenden in Verbindung mit dem in den Fig. 10 und 11 gezeigten Ausführungsbeispiel beschrieben wird.

Dieses Ausführungsbeispiel ist überdies an Anwendungsfälle angepaßt, bei denen die Lage des die magnetischen Kreise schließenden Jochs bezüglich des Kerns nicht so exakt definierbar ist, wie dies beim Beispiel der Fig. 7 bis 9 vorausgesetzt wurde. So sind beispielsweise Tank-Füllstandsanzeigen bekannt, bei denen eine vertikal angeordnete, zylindrische Stange so mit einem Schwimmer gekoppelt ist, daß sie sich mit diesem entsprechend dem Pegel der im Tank befindlichen Flüssigkeit senkrecht auf und ab bewegt. Solche Stangen werden dabei aber nur für ihre in Längsrichtung erfolgende Verschiebung geführt und können sich um ihre Längsachse frei drehen.

Bei dem Ausführungsbeispiel der Fig. 10 und 11 ist eine solche Stange 201 dadurch als Joch 202 eines induktiven Lineargebers 200 ausgebildet, daß sie eine Vielzahl von Ringen 204 aus einem Material hoher magnetischer Permeabilität trägt, die alle die gleiche axiale Länge besitzen und mit axialen Abständen voneinander angeordnet sind, die von einem Ende der Stange 201 zum anderen Ende hin von einem Minimalwert, der gleich der axialen Länge der Ringe 204 ist, systematisch schrittweise zunehmen. Die Stange 201 selbst kann dabei aus einem nicht ferromagnetischen Material bestehen. Vorzugsweise sind jedoch die Ringe 204 mit der Stange 201 dadurch einstückig ausgebildet, daß in eine aus einem ferromagnetischen Material bestehende zylindrische Stange mit einem dem Außendurchmesser der Ringe 204 entsprechenden Durchmesser Nuten 205 eingefräst sind, deren axiale Längen die Abstände 205 definieren. Zur Erzielung einer glatten, kontinuierlichen Oberfläche können die Nuten 205 mit irgendeinem geeigneten Material mit niederer magnetischer Permeabilität ausgefüllt sein.

Der Kern 208 des induktiven Lineargebers 200 besitzt wie beim Ausführungsbeispiel der Fig. 7 und 8 die Form eines langgestreckten Quaders mit zwei sich in Längsrichtung erstreckenden Nuten 212, 214, die in die dem Joch 202 zugewandte Oberfläche des Kerns 208 eingearbeitet sind. Diese Oberfläche des Kerns 208 ist Teil einer Kreiszylinder-Mantelfläche, die mit der Stange 201 koaxial angeordnet ist, um die für die Relativbewegung zwischen Kern 208 und Joch 202 erforderlichen Spalte möglichst gleichförmig und eng halten zu können.

Unterschiede zur Anordnung der Fig. 7 und 8 bestehen darin, daß hier die Erregerspule 216 auf den mittleren Schenkel 218 des im Querschnitt E-förmigen Kerns 208 gewickelt ist und die beiden äußeren Schenkel 219 und 220 jeweils dadurch einen Meßweg oder Ausgleichsweg definieren, daß im Bereich der Spalte, die sie mit dem Joch 202 bilden, eine eigene Meßspulenanordnung 222 bzw. 224 angeordnet ist. Zur wichtigen Symmetrierung der magnetischen Widerstände ist die Breite der beiden äußeren Schenkel 219, 220 gleich und jeweils etwa halb so groß wie die des mittleren Schenkels 218. Die vorliegende Form des Kerns ist die beste Art der Symmetrierung.

Die in Fig. 11 schematisch dargestellten Meßspulenanordnungen 222 und 224 sind jeweils in Form einer gedruckten Schaltung ausgebildet, wobei Fig. 11 nur die Leitbahnführung andeutet. Auch hier befinden sich mit durchgezogenen Linien wiedergegebene Leitbahnabschnitte auf der dem Betrachter zugewandten Seite der nicht dargestellten Schaltungsplatine, während gestrichelt dargestellte Leitbahnen auf der vom Betrachter abgewandten Seite verlaufen. Durchstoßpunkte, in denen Leitbahnen in elektrisch leitender Verbindung die Platinenseite wechseln, sind durch punktförmige Verdickungen angedeutet. Wichtig ist, daß auch hier eng parallel nebeneinander dargestellte, auf unterschiedlichen Flächen befindliche Leitbahnabschnitte tatsächlich deckungsgleich übereinander auf den beiden Seiten der Schaltungsplatine angeordnet sind.

Während die Meßspulenanordnung aus Fig. 7 die lineare Variante der Drehgebermeßspulen der Fig. 4 und 5 bildet, entspricht jede der Meßspulenanordnungen 222, 224 der Drehgebervariante nach Fig. 6 mit dem Unterschied, daß statt der dort den Meßweg überdeckenden sechs Flächenelemente 81 bis 85 hier acht in Form länglicher Rechtecke ausgebildete Flächenelemente 231 bis 238 so dimensioniert und nebeneinander angeordnet sind, daß sich ihre Längsachsen senkrecht zur Verschiebungsrichtung (Pfeil F) erstrecken und sie in dieser Verschiebungsrichtung genau eine "Periode" des Meßweges überdecken, die gleich der zweifachen axialen Länge eines der Ringe 204 ist. In jeder der beiden Meßspulenanordnungen 222 und 224 schließen sich an die acht Flächenelemente 231 bis 238, die unter idealen Bedingungen zur Messung ausreichen, vier weitere gleich angeordnete Flächenelemente 239 bis 242 an, deren Bedeutung weiter unten genauer erläutert wird.

Jedes der Flächenelemente 231 bis 242 ist von einer eigenen Meßspulenwindung mit einem eigenen Paar von Anschlüssen 251 bis 262 umschlossen und liegt teilweise in der oberen und teilweise in der unteren Leitbahnebene, so daß die gemeinsamen Randbereiche von jeweils zwei in Verschiebungsrichtung aneinander anschließenden Flächenelementen von zwei senkrecht zur Verschiebungsrichtung verlaufenden Randleitern gebildet werden, die in Fig. 11 zwar nebeneinander gezeichnet sind, in Wirklichkeit aber genau deckungsgleich übereinander liegen. Dies gilt nicht nur für das exemplarisch herausgegriffene Randleiterpaar 244, 245 der Flächenelemente 235,236 sondern in gleicher Weise für alle anderen Randleiterpaare.

An den Anschlußleiterpaaren 251 bis 262 werden die in den Meßspulenwindungen induzierten Spannungen hochohmig abgegriffen, so daß die niederohmigen Bahnwiderstände keinen Einfluß haben. Unterschiede in den Leitbahnwiderständen können daher das Meßergebnis nicht beeinflussen.

Auch hier werden zur Bildung von Differenzsignalen $\Delta U_1$ und $\Delta U_2$ die Ausgangsspannungen der Meßspulenwindungen in ähnlicher Weise miteinander verknüpft, wie dies oben für die Meßspulenanordnung der Fig. 6 beschrieben wurde.

Beispielsweise gilt

$$\Delta U_1 = U_{231} + U_{232} + U_{233} + U_{234} - (U_{235} + U_{236} + U_{237} + U_{238})$$

und

$$\Delta U_2 = U_{232} + U_{233} + U_{234} + U_{235} - (U_{236} + U_{237} + U_{238} + U_{231})$$

wobei die Spannungen $U_{236}$ bis $U_{238}$ immer so miteinander kombiniert werden, daß an den axialen Kanten der Ringe 204 auftretende Streufeldeffekte den linearen Verlauf der Differenzspannungen $\Delta U_1$ und $\Delta U_2$ nicht beeinflussen.

Bildet man den der obigen Gleichung (2) entsprechenden Quotienten, so ergibt sich in Analogie zur Gleichung (3) der Ausdruck

$$\frac{(U_{232} - U_{236}) + (U_{233} - U_{237}) + (U_{234} - U_{238})}{(U_{231} - U_{235})}$$

Es läßt sich auch hier zeigen, daß für jede beliebige Stellung der durch einen der Ringe 204 definierten Durchtrittsfläche bezüglich einer der Meßspulenanordnungen 222 oder 224 aus diesen vier Spannungsdifferenzen Zwischensignale mit der erforderlichen Linearität gebildet werden können, aus denen verschiedene, das Meßsignal darstellende Quotienten erzeugt werden, bei denen jeweils drei andere Spannungsdifferenzen den Zähler und die jeweils vierte Spannungsdifferenz den Nenner bilden.

Die eben gemachten Aussagen sind auch dann zutreffend, wenn anders als oben beschrieben, alle Nuten 205 die gleiche axiale Länge besitzen. In diesem Fall ist nur eine der Meßspulenanordnungen 222 oder 224 erforderlich. Allerdings können mit einer solchen Anordnung nur Feinmeßwerte gewonnen werden, die die momentane Lage desjenigen der Ringe 204 exakt wiedergeben, der sich gerade im Bereich der Meßspulenanordnung befindet. Um welchen der Ringe 204 es sich dabei handelt, ist jedoch nicht feststellbar.

Um letzteres erkennen zu können, ist bei dem in den Fig. 10 und 11 gezeigten Ausführungsbeispiel durch die beschriebene Variation der Abstände der Ringe 204 eine Kodierung aufgebracht und die zweite Meßspulenanordnung 224 im Ausgleichsweg vorgesehen, deren Meßspulen gegen die Meßspulen der ersten Meßspulenanordnung 222 um zwei Ringlängen, d.h. um acht Flächenelementbreiten in Bewegungsrichtung versetzt angeordnet sind. Auch mit Hilfe dieser zweiten Meßspulenanordnung 224 läßt sich ein Feinmeßwert gewinnen, der die exakte Lage eines dem Ring 204 an der ersten Meßspulenanordnung 222 benachbarten Ringes 204 bezüglich der zweiten Meßspulenanordnung 224 wiedergibt.

Da aber sämtliche Abstände zwischen einander benachbarten Ringen 204 unterschiedlich sind, differieren nicht nur die von den beiden Meßspulenanordnungen 222 und 224 gewinnbaren Feinmeßwerte, sondern ist deren Differenz für jedes Paar von einander benachbarten Ringen 204 eine andere. Somit erhält man aus dem Vergleich der beiden Feinmeßwerte einen Grobmeßwert, der eine eindeutige Lagebestimmung des Kerns 208 bezüglich des Jochs 202 über dessen gesamte Länge hinweg ermöglicht.

Um dies zu erreichen, würden, eine ideale Justierung des Kerns 208 bezüglich des Jochs 202 vorausgesetzt, in jeder der Meßspulenanordnungen 222 und 224 die "äußeren" acht Flächeneleemente 231 bis 238 genügen, die so angeordnet sind, daß die eine Meßspulengruppe in Längsrichtung exakt an die andere anschließt. Ist aber die Längsachse des Kerns 208 und/oder der Meßspulenanordnungen 222 und 224 gegen die Längsachse des Jochs 202 verkippt, so kann es geschehen, daß Streufeldlinien, die sich mit der Kante eines Rings 204 über das letzte Flächenelement 238 der einen Meßspulenanordnung 222 hinausbewegen, nicht sofort in das erste Flächenelement 231 der anderen Meßspulenanordnung 224 eintreten (oder umgekehrt). Um dadurch bedingte Verschlechterungen der Meßgenauigkeit und Linearität zu vermeiden, ist es daher zweckmäßig, die beiden Anordnungen überlappend auszubilden, was durch die jeweils vorgesehenen vier weiteren Flächenelemente 239 bis 243 geschieht.

Ein weiterer Vorteil dieser jeweils vier zusätzlichen Flächenelemente besteht darin, daß die Relativbewegung eines Ringes 204 durch Umschalten auf immer neue Flächenelemente innerhalb einer Meßspulenanordnung länger messend mitverfolgt werden kann, so daß trotz der von Ringpaar zu Ringpaar variierenden Abstände zwischen benachbarten Ringen 204 immer ein exakter Anschluß des von der einen Meßspulenanordnung 222 bzw. 224 gewonnenen Feinmeßwertes an den der anderen Meßspulenanordnung gewährleistet.

Bei allen beschriebenen Ausführungsformen, bei denen mit Hilfe von Schaltern bzw. Umschaltern verschiedene Meßspulenwindungen zu verschiedenen Zeiten zur Bildung von Differenzsignalen herangezogen werden, können diese Schalter bzw. Umschalter zu einem Multiplexer zusammengefaßt werden, der die Eingangsstufe der Schaltungsanordnung bildet, die zur Auswertung der Meßspulensignale und Ermittelung des Meßwertes der jeweiligen Meßspulenanordnung nachgeschaltet ist.

## Patentansprüche

1. Geber zur induktiven Erzeugung eines Meßsignals, das die Stellung wiedergibt, die der eine von zwei gegeneinander bewegbaren Körpern bezüglich des anderen einnimmt, wobei der Geber folgende Bestandteile umfaßt:

   - wenigstens eine Erregerspule, die zur Erzeugung eines magnetischen Flusses mit Wechselstrom gespeist wird,
   - eine Meßspulenanordnung (30; 50; 80; 125), die zwei Meßspulengruppen aufweist, von denen jede aus wenigstens zwei Meßspulen besteht, die elektrisch so miteinander verbunden sind, daß das von ihnen erzeugte Gruppen-Ausgangssignal die Differenz ihrer Spannungen ist,
   - eine Fluß-Führungsvorrichtung (4, 4; 111, 112) aus ferromagnetischem Material, die den von der Erregerspule erzeugten Magnetfluß auf einem ringförmig geschlossenen Meßweg so führt, daß zumindest ein Teil des Magnetflusses die Meßspulenanordnung (30; 50; 80; 125) durchsetzt und sich wenigstens eines der Gruppen-Ausgangssignale in Abhängigkeit von der Bewegung des einen der beiden Körper gegen den anderen ändert, und
   - eine Schaltungsanordnung, die zur Erzeugung des Meßsignals einen Quotienten bildet, in den die Gruppen-Ausgangssignale eingehen,

   dadurch **gekennzeichnet**, daß die beiden Meßspulengruppen in Bewegungsrichtung der Körper gegeneinander versetzt angeordnet sind, und daß die Schaltungsanordnung zur Erzeugung des Meßsignals bei der Quotientenbildung als Nenner die konstante Summe der Gruppen-Ausgangssignale und als Zähler entweder eines der beiden Gruppen-Ausgangssignale oder deren Differenz verwendet.

2. Geber nach Anspruch 1, dadurch **gekennzeichnet**, daß der Meßweg wenigstens einen Spalt (121; 134) aufweist, in dessen Bereich die Meßspulenanordnung (30;50; 80; 125) so positioniert ist, daß von ihren Windungen umschlossene Flächen (40, 41, 42, 43; 81 bis 86) von Teilen des Magnetflusses, der im Spalt (21; 134) übertritt, durchsetzt werden können die sich in Abhängigkeit von der Bewegung des einen der beiden Körper gegen den anderen ändern.

3. Geber nach Anspruch 1 oder 2, dadurch **gekennzeichnet**, daß die Fluß-Führungsvorrichtung (4, 4; 111, 112) für den von der Erregerspule (7; 120) erzeugten Magnetfluß wenigstens einen ringförmig geschlossenen Ausgleichsweg vorgibt, der den ihn durchsetzenden Magentfluß an der Meßspulenanordnung (30; 50; 80; 125) vorbeiführt und wenigstens einen Spalt (21; 132) aufweist.

4. Geber nach einem der Ansprüche 2 oder 3, dadurch **gekennzeichnet**, daß die Flächen (40, 41, 42, 43; 81 bis 86) der Meßspulenanordnung (30; 50; 80; 125) jeweils von einer einzigen Meßspulenwindung umschlossen und in etwa in einer gemeinsamen Fläche angeordnet sind, daß die Projektion einer Spaltwand (12, 12) in Richtung des im Spalt (21; 134) übertretenden Magnetflusses auf die gemeinsame Fläche eine Durchtrittsfläche bildet, die gegen die von den Meßspulenwindungen umschlossenen Flächen (40, 41, 42, 43; 81 bis 86) in einer Verschieberichtung verschiebbar ist, die von der Bewegung des einen der beiden Körper gegen den anderen abhängt.

5. Geber nach Anspruch 4, dadurch **gekennzechet**, daß die von Meßspulenwindungen umschlossenen Flächen (40, 41, 42, 43; 81 bis 86) und die wenigstens eine Durchtrittsfläche einander geometrisch ähnlich sind und die Form von länglichen Vierecken aufweisen, deren lange Seiten zueinander und zur Verschieberichtung in etwa parallel verlaufen und deren kurze Seiten sich zur Verschieberichtung senkrecht erstrecken.

6. Geber nach Anspruch 5, dadurch **gekennzeichnet**, daß die von Meßspulenwindungen umschlossenen Flächen (40, 41, 42, 43; 81 bis 86) senkrecht zur Verschieberichtung größere Abmessungen aufweisen als die Durchtrittsfläche.

7. Geber nach Anspruch 5 oder 6, dadurch **gekennzeichnet**, daß die von Meßspulenwindungen umschlossenen Flächen (40, 41, 42, 43; 81 bis 86) die eine Gruppe bilden, wenigstens ein gemeinsames Randstück aufweisen, das sich in etwa senkrecht zur Verschieberichtung erstreckt.

8. Geber nach Anspruch 7, dadurch **gekennzeichnet**, daß sich entlang der aneinander anschließenden, in Verschieberichtung verlaufenden Seiten von zwei benachbarten Flächen (40, 41, 42, 43) jeweils ein durchgehender, den Meßspulenwindungen beider Flächen (40, 41, 42, 43) angehörender Leiter (31, 32, 33) erstreckt, und daß ein gemeinsames Randstück dieser Flächen (40, 41, 42, 43) von einem quer zur Verschieberichtung verlaufenden Leiter (34, 35, 44, 45; 51 bis 58) gebildet wird, der mit wenigstens einem der beiden durchgehenden Leiter (32, 33) elektrisch leitend fest verbunden ist.

9. Geber nach Anspruch 8, dadurch **gekennzeichnet**, daß der quer verlaufende Leiter(34, 44) dadurch als fest verdrahteter Steg ausgebildet ist, daß er auch mit dem zweiten durchgehenden Leiter (31) elektrisch leitend fest verbunden ist.

10. Geber nach Anspruch 8, dadurch **gekennzeichnet**, daß der quer verlaufende Leiter (55, 56, 57, 58) dadurch als schaltbarer Trennsteg ausgebildet ist, daß er mit dem zweiten durchgehenden Leiter (31) über einen steuerbaren EIN/AUS-Schalter (74, 75, 76, 77) verbunden ist.

11. Geber nach Anspruch 8, dadurch **gekennzeichnet**, daß der quer verlaufende Leiter (35, 45; 51, 52, 53, 54) dadurch als Anschlußleiter ausgebildet ist, daß er sich über den zweiten durchgehenden Leiter (31) ohne elektrisch leitende Verbindung mit diesem hinweg erstreckt.

12. Geber nach einem der vorhergehenden Ansprüche, dadurch **gekennzeichnet**, daß von Meßspulenwindungen umschlossene Flächen (40, 42 und 41, 43), die zu verschiedenen Gruppen gehören, wenigstens einen sich in Verschieberichtung erstreckenden Leiter (31, 32, 33) gemeinsam haben.

13. Geber nach Anspruch 7, dadurch **gekennzeichnet**, daß das gemeinsame Randstück von zwei Leitern (96, 97) gebildet wird, die in Richtung des Magnetflusses gesehen, der die Flächen (81 bis 86) durchsetzen kann, in geringem Abstand so hintereinander angeordnet sind, daß sie miteinander zur Deckung kommen.

14. Geber nach Anspruch 13, dadurch **gekennzeichnet**, daß mehrere in Verschieberichtung hintereinander angeordnete, jeweils mit gemeinsamen Randstücken aneinander anschließende, von Meßspulenwindungen umschlossene Flächen (81 bis 86) vorgesehen sind, daß die Meßspulenwindungen, die verschiedene Flächen (81 bis 86) umschließen, von voneinander unabhängigen Leitern gebildet werden, und daß die Ausgangsspannungen ($U_{81}$ bis $U_{86}$) der

verschiedenen Meßspulenwindungen zur Erzeugung der Zwischensignale in wechselnder Weise miteinander kombinierbar sind.

15. Geber nach einem der Ansprüche 2 bis 14, der als Drehgeber ausgebildet ist, dadurch **gekennzeichnet**, daß die von den Meßspulenwindungen umschlossenen Flächen (40, 41, 42, 43; 81 bis 86) in einer Ebene liegen, die sich in etwa senkrecht zur Drehachse der Bewegung des einen der beiden Körper bezüglich des anderen erstreckt, und daß diese Flächen (40, 41, 42, 43; 81 bis 86) und die Durchtrittsfläche die Form von Teilkreisringen besitzen, die zur Drehachse konzentrisch angeordnet sind.

16. Geber nach einem der Ansprüche 8 bis 11 und 15, dadurch **gekennzeichnet**, daß die von Meßspulenwindungen umschlossenen Flächen (40, 41, 42, 43) auf der radial außenliegenden Seite von einem gemeinsamen kreisförmigen geschlossenen Leiter (31) und auf der radial innenliegenden Seite von zwei kreisförmig geschlossenen Leitern (32, 33) begrenzt sind, die in Richtung des Magnetflusses, der die Flächen (40, 41, 42, 43) durchsetzen kann, in geringem Abstand deckungsgleich hintereinander liegen.

17. Geber nach einem der Ansprüche 8 bis 11 und 15, dadurch **gekennzeichnet**, daß die von Meßspulenwindungen umschlossenen Flächen auf der radial innenliegenden Seite von einem gemeinsamen kreisförmig geschlossenen Leiter und auf der radial außenliegenden Seite von zwei kreisförmig geschlossenen Leitern begrenzt sind, die in Richtung des Magnetflusses, der die Flächen durchsetzen kann, in geringem Abstand deckungsgleich hintereinander liegen.

18. Geber nach Anspruch 16 oder 17 dadurch **gekennzeichnet**, daß jede Gruppe von von Meßspulenwindungen umschlossenen Flächen (40, 41 und 42, 43) zwei halbkreisringförmige Flächen umfaßt, die sich zu einem geschlossenen Kreisring ergänzen.

19. Geber nach Anspruch 18, dadurch **gekennzeichnet**, daß zwei um 180° gegeneinander versetzt angeordnete Gruppen von von Meßspulenwindungen umschlossenen Flächen vorgesehen sind, an deren Anschlußleitern die beiden Gruppen-Ausgangssignale abgegriffen werden.

20. Geber nach Anspruch 18, dadurch **gekennzeichnet**, daß drei jeweils um 120° gegeneinander versetzt angeordnete Gruppen von von Meßspulenwindungen umschlossenen Flächen vorgesehen sind, und daß die beiden Gruppen-Ausgangssignale jeweils von den Anschlußleitern der beiden Gruppen abgegriffen werden, deren gemeinsame Randbereiche von den Enden der teilkreisförmigen Durchtrittsfläche die größeren Winkelabstände aufweisen.

21. Geber nach Anspruch 16 oder 17, dadurch **gekennzeichnet**, daß eine Vielzahl von teilkreisringförmigen, von Meßspulenwindungen umschlossenen Flächen vorgesehen ist, die sich zu einem Vollkreisring ergänzen, und daß sich immer zwei radial verlaufende Leiter (51, 55; 52, 56; 53, 57; 54, 59) diametral gegenüberliegen, von denen jeweils einer einen schaltbaren Steg und einer einen Anschlußleiter bildet.

22. Geber nach Anspruch 21, dadurch **gekennzeichnet**, daß acht sich jeweils über 45° erstreckende, von Meßspulenwindungen umschlossene Flächen vorgesehen sind und daß die quer verlaufenden Leiterstücke (51 bis 58) alternierend mit dem einen und dem anderen der beiden deckungsgleichen kreisförmigen Leiter (32, 33) elektrisch leitend fest verbunden sind.

23. Geber nach Anspruch 14 und 15, dadurch **gekennzeichnet**, daß eine gerade Anzahl von teilkreisringförmigen, von Meßspulenwindungen umschlossenen Flächen (81 bis 86) vorgesehen ist, die sich zu einem Vollkreisring ergänzen, daß die Anschlußleiter (88, 91; 89, 92; 90, 93) der Meßspulenwindungen von jeweils zwei einander diametral gegenüberliegenden, von Meßspulenwindungen umschlossenen Flächen (81, 84; 82, 85; 83, 86) zur Bildung der Differenzen ($U_{81} - U_{84}$; $U_{82} - U_{85}$; $U_{83} - U_{86}$) ihrer Spannungen fest miteinander verdrahtet sind und daß eine steuerbare Schalteranordnung (94, 99, 100, 101) vorgesehen ist, mit deren Hilfe die Spannungsdifferenzen in Abhängigkeit von der momentanen Stellung der Durchtrittsfläche in wechselnder Weise zur Bildung der Gruppen-Ausgangssignale herangezogen werden.

24. Geber nach einem der Ansprüche 2 bis 14, der als Lineargeber ausgebildet ist, dadurch **gekennzeichnet**, daß die von Meßspulenwindungen umschlossenen Flächen in einer Ebene liegen, die sich in etwa parallel zur Bewegungsrichtung des einen der beiden Körper bezüglich des anderen erstreckt, und daß die wenigstens eine Durchtrittsfläche und die von Meßspulenwindungen umschlossenen Flächen die Form von länglichen Rechtecken besitzen, die sich in Bewegungsrichtung erstrecken.

**25.** Geber nach Anspruch 24, dadurch **gekennzeichnet**, daß die Flußführungsvorrichtung (111, 112) so ausgebildet ist, daß sich beim Durchlaufen des Bewegungsbereiches des einen gegen den anderen der beiden Körper mehrere voneinander in Bewegungsrichtung beabstandete Durchtrittsflächen der Reihe nach über die von Meßspulenwindungen umschlossenen Flächen hinweg verschieben.

**26.** Geber nach Anspruch 25, dadurch **gekennzeichnet**, daß die Durchtrittsflächen in Verschieberichtung gleiche Längen und gleiche Abstände aufweisen und daß diese Längen und Abstände gleich groß sind.

**27.** Geber nach einem der Ansprüche 24 bis 26, dadurch **gekennzeichnet**, daß die von Meßspulenwindungen umschlossenen Flächen der verschiedenen Gruppen auf der einen, sich parallel zur Verschieberichtung erstreckenden Seite von einem gemeinsamen durchgehenden Leiter und auf der gegenüberliegenden, zur Verschieberichtung parallelen Seite von zwei durchgehenden Leitern begrenzt werden, die in Richtung des Magnetflusses, der die von Meßspulenwindungen umschlossenen Flächen durchsetzen kann, in geringem Abstand deckungsgleich hintereinander liegen.

**28.** Geber nach Anspruch 27, dadurch **gekennzeichnet**, daß jede Gruppe von von Meßspulenwindungen umschlossenen Flächen zwei Flächen in Form von länglichen Rechtecken umschließt, die in Verschieberichtung mit einem gemeinsamen Randbereich aneinander angrenzen und jeweils eine Länge besitzen, die gleich der Länge der Durchtrittsflächen ist.

**29.** Geber nach Anspruch 28, dadurch **gekennzeichnet**, daß die von Meßspulenwindungen umschlossenen Flächen einer Gruppe an ihren Endkanten, die dem gemeinsamen Randbereich gegenüberliegen, von einem quer zur Verschieberichtung verlaufenden Leiter begrenzt werden, der mit einem der sich in Verschieberichtung erstreckenden durchgehenden Leiter elektrisch leitend fest verbunden ist, und mit einem anderen sich in verschieberichtung erstreckenden durchgehenden Leiter durch einen steuerbaren EIN/AUS-Schalter verbunden werden kann.

**30.** Geber nach Anspruch 29, dadurch **gekennzeichnet**, daß vier jeweils um ein Viertel der Länge der Durchtrittsflächen in Verschieberichtung gegeneinander versetzte Gruppen von von Meßspulenwindungen umschlossenen Flächen vorgesehen sind, von denen jeweils die beiden Gruppen durch Schließen der zugehörigen EIN/AUS-Schalter zur Erzeugung der für die Bildung der Gruppen-Ausgangssignale erforderlichen Spannungsdifferenzen ($\Delta U_1$, $\Delta U_2$) verwendet werden, deren Endkanten von den in Verschieberichtung vorderen bzw. hinteren Kanten der Durchtrittsflächen die größeren Abstände aufweisen.

**Claims**

**1.** A pick-up for the inductive production of a measurement signal which reproduces the position which is occupied by one of two mutually movable bodies, with respect to the other, wherein the pick-up includes the following components:

- at least one exciter coil which is fed with alternating current to generate a magnetic flux,
- a measurement coil arrangement (30; 50; 80; 125) which has two measurement coil groups, each of which comprises at least two measurement coils which are electrically connected together in such a way that the group output signal produced by them is the difference in their voltages;
- a flux guide means (4, 4; 11, 112) of ferromagnetic material which carries the magnetic flux generated by the exciter coil, on an annularly closed measurement path, in such a way that at least a part of the magnetic flux passes through the measurement coil arrangement (30; 50; 80: 125) and at least one of the group output signals changes in dependence on the movement of one of the two bodies relative to the other, and
- a circuit arrangemnt which to produce the measurement signal forms a quotient involving the group output signals,

characterised in that the two measurement coil groups are arranged displaced in the direction of movement of the bodies relative to each other and that the circuit arrangement for producing the measurement signal in the quotient-forming operation uses the constant sun of the group output signals as the denominator and either one of the two group output signals or their difference as the numerator.

**2.** A pick-up according to claim 1 characterised in that the measurement path has at least one gap (121; 134), in the region of which the measurement coil arrangement (30; 50; 80; 125) is so positioned that surfaces (40, 41, 42, 43;

81 to 86) which are enclosed by the turns thereof can be transited by parts of the magnetic flux which crosses over in the gap (21; 134), said parts changing in dependence on the movement of one of the two bodies relative to the other.

3. A pick-up according to claim 1 or claim 2 characterised in that the flux guide means (4, 4; 111, 112) for the magnetic flux generated by the exciter coil (7; 120) predetermines at least one annularly closed compensating path which carries the magnetic flux passing therethrough, past the measurement coil arrangement (30; 50; 80; 125), and has at least one gap (21; 132).

4. A pick-up according to one of claims 2 and 3 characterised in that the surfaces (40, 41, 42, 43; 81 to 86) of the measurement coil arrangemnt (30; 50; 80; 125) are each enclosed by a single measurement coil turn and are arranged approximately in a common surface, that the projection of a gap wall (12, 12) in the direction of the magnetic flux which crosses over in the gap (21; 134) onto the common surface forms a transit surface which is displaceable relative to the surfaces (40, 41, 42, 43,; 81 to 86) enclosed by the measurement coil turns in a direction of displacement which depends on the movement of one of the two bodies relative to the other.

5. A pick-up according to claim 4 characterised in that the surfaces (40, 41, 42, 43; 81 to 86) enclosed by measuremnt coil turns and the at least one transit surface are geometrically similar to each other and are in the shape of elongate quadrilaterals whose long sides extend substantially parallel to each other and to the direction of displacement and whose short sides extend perpendicularly to the direction of displacement.

6. A pick-up according to claim 5 characterised in that the surfaces (40, 41, 42, 43; 81 to 86) enclosed by measurement coil turns are of larger dimensions than the transit surface, perpendicularly to the direction of displacement.

7. A pick-up according to claim 5 or claim 6 characterised in that the surfaces (40, 41, 42, 43; 81 to 86) which are enclosed by measurement coil turns and which form a group have at least one cannon edge portion which extends substantially perpendicuarly to the direction of displacement.

8. A pick-up according to claim 7 characterised in that extending along the mutually adjoining sides, which extend in the direction of displacement, of two adjacent surfaces (40, 41, 42, 43) is a respective continuous conductor (31, 32, 33) which belongs to the measurement coil turns of both surfaces (40, 41, 42, 43), and that a common edge portion of said surfaces (40, 41, 42, 43) is formed by a conductor (34, 35, 44, 45; 51 to 58) which extends transversely to the direction of displacement and which is electrically conductively fixedly connected to at least one of the two continuous conductors (32, 33).

9. A pick-up according to claim 8 characterised in that the transversely extending conductor (34, 44) is in the form of a fixed-wired limb portion, by virtue of the fact that it is also electrically conductively fixedly connected to the second continuous conductor (31).

10. A pick-up according to claim 8 characterised in that the transversely extending conductor (55, 56, 57, 58) is formed as a switchable separating limb portion, by virtue of the fact that it is connected to the second continuous conductor (31) by way of a controllable on/off switch (74, 75, 76, 77).

11. A pick-up according to claim 8 characterised in that the transversely extending conductor (35, 45; 51, 52, 53, 54) is formed as a connecting conductor, by virtue of the fact that it extends across the second continuous conductor (31) without electrically conductive connection thereto.

12. A pick-up according to one of the preceding claims characterised in that surfaces (40, 42 and 41, 43) which are enclosed by measurement coil turns and which belong to different groups have in common at least one conductor (31, 32, 33) which extends in the direction of displacement.

13. A pick-up according to claim 7 characterised in that the common edge portion is formed by two conductors (96, 97) which, as viewed in the direction of the magnetic flux which can pass through the surfaces (81 to 86) are arranged one behind the other at a small spacing in such a way that they coincide with each other.

14. A pick-up according to claim 13 characterised in that there are provided a plurality of surfaces (81 to 86) which are arranged in succession in the direction of displacement and which each adjoin each other with common edge portions and which are enclosed by measuremnt coil turns, that the measurement coil turns which enclose different surfaces (81 to 86) are formed by mutually independent conductors, and that the output voltages ($U_{81}$ to $U_{86}$) of the various measurement coil turns can be combined together alternately to produce the intermediate signals.

15. A pick-up according to one of claims 2 to 14 which is in the form of a rotary pick-up characterised in that the surfaces (40, 41, 42, 43; 81 to 86) which are enclosed by measurement coil turns are disposed in a plane which extends substantially perpendicularly to the axis of rotation of the movement of one of the two bodies relative to the other, and that said surfaces (40, 41, 42, 43; 81 to 86) and the transit surface are in the form of parts of circular rings which are arranged concentrically relative to the axis of rotation.

16. A pick-up according to one of claims 8 to 11 and 15 characterised in that the surfaces (40, 41, 42, 43) which are enclosed by measurement coil turns are defined on the radially outward side by a common circular closed conductor (31) and on the radially inward side by two circularly closed conductors (32, 33) which are disposed at a small spacing in congruent relationship one behind the other in the direction of the magnetic flux which can pass through the surfaces (40, 41, 42, 43).

17. A pick-up according to one of claims 8 to 11 and 15 characterised in that the surfaces which are enclosed by measurement coil turns are defined on the radially inward side by a common circularly closed conductor and on the radially outward side by two circularly closed conductors which are disposed at a small spacing in congruent relationship one behind the other in the direction of the magnetic flux which can pass through the surface elements.

18. A pick-up according to claim 16 or claim 17 characterised in that each group of surfaces (40, 41, and 42, 43) which are enclosed by measurement coil turns includes two surfaces which are in the form of half a circular ring and which supplement each other to provide a closed circular ring.

19. A pick-up according to claim 18 characterised in that there are provided two groups, which are arranged in displaced relationship relative to each other through 180°, of surfaces which are enclosed by measurement coil turns, the two group output signals being taken off at the connecting conductors thereof.

20. A pick-up according to claim 18 characterised in that there are provided three groups, which are arranged in displaced relationship relative to each other through 120°, of surfaces which are enclosed by measurement coil turns and that the two group output signals are each taken off by the connecting conductors of the two groups whose common edge regions are at the greater angular spacings from the ends of the part-circular transit surfaces.

21. A pick-up according to claim 16 or claim 17 characterised in that there is provided a plurality of surfaces which are enclosed by measurement coil turns and which are in the form of part of a circular ring and which supplement each other to provide a full circular ring, and that there are always two radially extending conductors (51, 55; 52, 56; 53, 57; 54, 59) which are disposed in diametrally opposite relationship and of which a respective one forms a switchable limb portion and one forms a connecting conductor.

22. A pick-up according to claim 21 characterised in that there are provided eight surfaces which each extend over 45° and are enclosed by measurement coil turns and that the transversely extending conductor portions (51 to 58) are alternately electrically conductively fixedly connected to the one and the other of the two congruent circular conductors (32, 33).

23. A pick-up according to claim 14 and claim 15 characterised in that there is provided an even number of surfaces (81 to 86) which are enclosed by measurement coil turns and which are in the form of part of a circular ring and which supplement each other to provide a full circular ring, that the connecting conductors (88, 91; 89, 92; 90, 93) of the measurement coil turns of each two diametrally oppositely disposed surfaces (81, 84; 82, 85; 83, 86) which are enclosed by measurement coil turns are fixedly wired together to form the differences ($U_{81}$ - $U_{84}$; $U_{82}$ - $U_{85}$; $U_{83}$ - $U_{86}$) of their voltages, and that there is provided a controllable switch arrangement (94, 99, 100, 101), by means of which the voltage differences are used alternately to form the group output signals in dependence on the instantaneous position of the transit surface.

24. A pick-up according to one of claim 2 to 14 which is in the form of a linear pick-up characterised in that the surfaces which are enclosed by measurement coil turns are disposed in a plane which extends substantially parallel to the direction of movement of one of the two bodies relative to the other, and that the at least one transit surface and the surfaces which are enclosed by measurement coil turns are in the shape of elongate rectangles which extend in the direction of movement.

**25.** A pick-up according to claim 24 characterised in that the flux guide means (111, 112) is of such a configuration that, on passing through the range of movement of one of the two bodies relative to the other, a plurality of transit surfaces which are spaced from each other in the direction of movement are displaced successively over the surfaces which are enclosed by measurement coil turns.

**26.** A pick-up according to claim 25 characterised in that the transit surfaces are of equal lengths and equal spacings in the direction of displacement and that said lengths and spacings are of equal magnitude.

**27.** A pick-up according to one of claims 24 to 26 characterised in that the surfaces of the various groups which are enclosed by measurement coil turns, on the one side which extends parallel to the direction of displacement, are defined by a common continuous conductor and on the opposite side which is parallel to the direction of displacement by two continuous conductors which lie at a small spacing in congruent relationship one behind the other in the direction of the magnetic flux which can pass through the surfaces which are enclosed by the measurement coil turns.

**28.** A pick-up according to claim 27 characterised in that each group of surfaces which are enclosed by measurement coil turns includes two surfaces that are in the form of elongate rectangles which adjoin each other in the direction of displacement with a common edge region and which are each of a length that is equal to the length of the transit surfaces.

**29.** A pick-up according to claim 28 characterised in that the surfaces of a group which are enclosed by measurement coil turns are defined at their end edges which are disposed opposite the common edge region by a conductor which extends transversely to the direction of displacement and Which is electrically conductively fixedly connected to one of the continuous conductors extending in the direction of displacement, and can be connected to another continuous conductor extending in the direction of displacement, by a controllable on/off switch.

**30.** A pick-up according to claim 29 characterised in that there are provided four groups of surfaces which are enclosed by measurement coil turns, which groups are respectively displaced relative to each other by a quarter of the length of the transit surfaces in the direction of displacement, of which groups the two respective groups whose end edges are at the greater spacings from the leading or trailing edges respectively of the transit surfaces, in the direction of displacement, are used to produce the voltage differences ($\Delta U_1$, $\Delta U_2$) required for forming the group output signals, by closure of the associated on/off switches.

**Revendications**

**1.** Transducteur pour produire par induction un signal de mesure qui reproduit la position qu'occupe un corps, parmi deux corps déplaçables l'un par rapport à l'autre, relativement à l'autre corps, le transducteur comportant les éléments constitutifs suivants :

- au moins une bobine d'excitation, qui est alimentée en courant alternatif pour produire un flux magnétique,
- un arrangement de bobines de mesure (30 ; 50 ; 80 ; 125) qui présente deux groupes de bobines de mesure, constitués chacun d'au moins deux bobines de mesure, qui sont reliées ensemble électriquement de telle sorte que le signal de sortie de groupe produit par elles est la différence de leur tension,
- un dispositif de guidage de flux (4, 4 ; 111, 112) en matériau ferromagnétique qui guide le flux magnétique produit par la bobine d'excitation sur un chemin de mesure fermé de forme annulaire de telle sorte qu'au moins une partie du flux magnétique traverse l'arrangement de bobine de mesure (30 ; 50 ; 80 ; 125) et qu'au moins un des signaux de sortie de groupe varie en fonction du déplacement d'un des deux corps par rapport à l'autre, et
- un arrangement de circuit qui pour produire le signal de mesure forme un quotient dans lequel entrent les signaux d'entrée de groupe,

caractérisé en ce que les deux groupes de bobines de mesure sont disposés de manière décalée l'un par rapport à l'autre dans la direction de déplacement des corps, et en ce que l'arrangement de circuit, pour produire le signal de mesure, lors de la formation du quotient, utilise comme dénominateur la somme constante des signaux de sortie de groupe et comme numérateur soit un des deux signaux de sortie de groupe soit leur différence.

**2.** Transducteur selon la revendication 1, caractérisé en ce que le chemin de mesure présente au moins une fente (121 ; 134), dans la zone de laquelle est positionné l'arrangement de bobines de mesure (30 ; 50 ; 80 ; 125) de telle sorte que des surfaces (40, 41, 42, 43 ; 81 à 86) entourées par ses spires peuvent être traversées par des parties du flux magnétique qui passent à travers la fente (21 ; 134), lesdites parties du flux magnétique variant en fonction du déplacement d'un des deux corps par rapport à l'autre.

3. Transducteur selon la revendication 1 ou 2, caractérisé en ce que le dispositif de guidage de flux (4, 4 ; 111, 112) pour le flux magnétique produit par la bobine d'excitation (7 ; 120) définit au moins un chemin de compensation fermé de forme annulaire qui fait passer devant le flux magnétique qui le traverse à côté de l'arrangement de bobines de mesure (30 ; 50 ; 80 ; 125) et présente au moins une fente (21 ; 132).

4. Transducteur selon l'une des revendications 2 ou 3, caractérisé en ce que les surfaces (40, 41, 42, 43 ; 81 à 86) de l'arrangement de bobines de mesure (30 ; 50 ; 80 ; 125) sont respectivement entourées par une seule spire de bobines de mesure et sont disposées environ dans une surface commune, en ce que la projection d'une paroi de fente (12, 12) en direction du flux magnétique passant à travers la fente (21 ; 134) forme sur la surface commune une surface de passage qui est déplaçable vers les surfaces (40, 41, 42, 43 ; 81 à 86) entourées par les spires de bobines de mesure dans une direction de déplacement, qui dépend du déplacement d'un des deux corps par rapport à l'autre.

5. Transducteur selon la revendication 4, caractérisé en ce que les surfaces (40, 41, 42, 43 ; 81 à 86) entourées par des spires de bobines de mesure et ladite au moins une surface de passage sont géométriquement similaires et présentent la forme de quadrilatères allongés, dont les longs côtés s'étendent environ parallèlement l'un à l'autre et par rapport à la direction de déplacement et dont les côtés courts s'étendent perpendiculairement à la direction de déplacement.

6. Transducteur selon la revendication 5, caractérisé en ce que les surfaces (40, 41, 42, 43 ; 81 à 86) entourées par des spires de bobines de mesure présentent, perpendiculairement à la direction de déplacement, des dimensions supérieures que les surfaces de passage.

7. Transducteur selon la revendication 5 ou 6, caractérisé en ce que les surfaces (40, 41, 42, 43 ; 81 à 86) entourées par des spires de bobines de mesure formant un groupe, présentent au moins une partie de bord commune qui s'étend environ perpendiculairement à la direction de déplacement.

8. Transducteur selon la revendication 7, caractérisé en ce que le long des côtés de deux surfaces adjacentes (40, 41, 42, 43) s'étendant en se joignant dans la direction longitudinale, s'étend respectivement un conducteur continu (31, 32, 33) appartenant aux spires de bobines de mesure des deux surfaces (40, 41, 42, 43), et en ce qu'une partie de bord commune de ces surfaces (40, 41, 42, 43) est formée par un conducteur (34, 35, 44, 45 ; 51 à 58) s'étendant transversalement par rapport à la direction de déplacement, qui est relié solidement de manière électriquement conductrice avec au moins un des deux conducteurs continus (32, 33).

9. Transducteur selon la revendication 8, caractérisé en ce que le conducteur (34, 44) s'étendant transversalement est réalisé sous la forme d'une entretoise fixement câblée du fait qu'il est relié solidement de manière électriquement conductrice également avec le deuxième conducteur continu (31).

10. Transducteur selon la revendication 8, caractérisé en ce que le conducteur (55, 56, 57, 58) s'étendant transversalement est réalisé sous la forme d'une entretoise de séparation commutable du fait qu'il est relié avec le deuxième conducteur continu (31) par l'intermédiaire d'un commutateur marche/arrêt actionnable (74, 75, 76, 77).

11. Transducteur selon la revendication 8, caractérisé en ce que le conducteur s'étendant transversalement (35, 45 ; 51, 52, 53, 54) est réalisé sous la forme d'un conducteur de raccordement du fait qu'il s'étend au-dessus du second conducteur continu (31) sans liaison électrique conductrice avec celui-ci.

12. Transducteur selon l'une des revendications précédentes, caractérisé en ce que des surfaces (40, 42 et 41, 43) entourées par des spires de bobines de mesure et qui appartiennent à des groupes différents ont au moins un conducteur commun (31, 32, 33) s'étendant dans la direction de déplacement.

13. Transducteur selon la revendication 7, caractérisé en ce que la partie de bord commune est formée par deux conducteurs (96, 97) qui, vu dans la direction du flux magnétique qui peut traverser les surfaces (81 à 86), sont disposés l'un derrière l'autre avec un faible écart de telle sorte qu'ils viennent en recouvrement l'un de l'autre.

14. Transducteur selon la revendication 13, caractérisé en ce que sont prévues plusieurs surfaces (81 à 86) disposées l'une derrière l'autre dans la direction de déplacement respectivement raccordées ensemble avec des parties de bord commune et entourées par des spires de bobines de mesure, en ce que les spires de bobines de mesure qui entourent des surfaces (81 à 86) différentes sont formées à partir de conducteurs indépendants les uns des autres, et en ce que les tensions de sortie ($U_{81}$ à $U_{86}$) des différentes spires de bobines de mesure peuvent être combinées ensemble de manière variable pour produire les signaux intermédiaires.

**15.** Transducteur selon l'une des revendications 2 à 14, qui est réalisé sous la forme d'un encodeur, caractérisé en ce que les surfaces (40, 41, 42, 43 ; 81 à 86) entourées par des spires de bobines de mesure sont disposées dans un plan qui s'étend environ perpendiculairement à l'axe de rotation du déplacement de l'un des deux corps par rapport à l'autre, et ce que ces surfaces (40, 41, 41, 43 ; 81 à 86) et la surface de passage présentent la forme de couronnes circulaires partielles, qui sont disposées de manière concentrique à l'axe de rotation.

**16.** Transducteur selon l'une des revendications 8 à 11 et 15, caractérisé en ce que les surfaces (40, 41, 42, 43) entourées par des spires de bobines de mesure sont délimitées sur le côté disposé radialement à l'extérieur par un conducteur (31) fermé circulaire commun et sur le côté disposé radialement à l'intérieur par deux conducteurs (32, 33) fermés circulaires qui, dans la direction du flux magnétique qui peut traverser les surfaces (40, 41, 42, 43), sont disposés en recouvrement l'un derrière l'autre avec un faible écart.

**17.** Transducteur selon l'une des revendications 8 à 11 et 15, caractérisé en ce que les surfaces entourées par des spires de bobines de mesure sont délimitées sur le côté disposé radialement à l'intérieur par un conducteur fermé circulaire commun et sur le côté disposé radialement à l'extérieur par deux conducteurs fermés circulaires qui, dans la direction du flux magnétique qui peut traverser les surfaces, sont disposés en recouvrement l'un derrière l'autre avec un faible écart.

**18.** Transducteur selon la revendication 16 ou 17, caractérisé en ce que chaque groupe de surfaces (40, 41 et 42, 43) entourées par des spires de bobines de mesure comprend deux surfaces en forme de demi-couronne circulaire, qui se complètent pour former une couronne circulaire fermée.

**19.** Transducteur selon la revendication 18, caractérisé en ce que sont prévus deux groupes de surfaces entourées par des spires de bobines de mesure, disposés de manière décalée l'un par rapport à l'autre d'un angle de 180° aux conducteurs de raccordement desquels sont prélevés les deux signaux de sortie de groupe.

**20.** Transducteur selon la revendication 18, caractérisé en ce que sont prévus trois groupes de surfaces entourées par des spires de bobines de mesure, disposés de manière décalée l'un par rapport à l'autre respectivement de 120°, et en ce que les deux signaux de sortie de groupe sont prélevés respectivement à partir des conducteurs de raccordement des deux groupes dont les zones de bord commune présentent à partir des extrémités des surfaces de passage en forme de couronne circulaire partielle les plus grands écarts angulaires.

**21.** Transducteur selon la revendication 16 ou 17, caractérisé en ce qu'il est prévu une pluralité de surfaces en forme de couronne circulaire partielle entourées par des spires de bobines de mesure qui se complètent pour former une couronne circulaire complète, et en ce que deux conducteurs s'étendant radialement (51, 55 ; 52, 56 ; 53, 57 ; 54, 59) sont toujours disposés diamétralement face à face, dont respectivement un forme une entretoise commutable et l'autre un conducteur de raccordement.

**22.** Transducteur selon la revendication 21, caractérisé en ce que sont prévues huit surfaces entourées par des spires de bobines de mesure, s'étendant respectivement sur 45° et en ce que les parties de conducteurs (51 à 58) s'étendant transversalement sont reliées fixement de manière électriquement conductrice et de manière alternée avec l'un et l'autre des deux conducteurs circulaires (32, 33) disposés en recouvrement.

**23.** Transducteur selon les revendications 14 et 15, caractérisé en ce qu'il est prévu un nombre pair de surfaces (81 à 86) en forme de couronne circulaire partielle entourées par des spires de bobines de mesure qui se complètent pour former une couronne circulaire complète, en ce que les conducteurs de raccordement (88, 91 ; 89, 92 ; 90, 93) des spires de bobines de mesure de respectivement deux surfaces (81, 84 ; 82, 85 ; 83, 86) disposées diamétralement l'une en face de l'autre et entourées par des spires de bobines de mesure sont fixement câblée ensemble pour former les différences de leur tension ($U_{81}$ - $U_{84}$ ; $U_{82}$ - $U_{85}$ ; $U_{83}$ - $U_{86}$) et en ce qu'un arrangement de commutateurs actionnables (94, 99, 100, 101) est prévu à l'aide duquel les différences de tension sont déterminées en fonction de la position momentanée de la surface de passage de manière variable pour former le signal de sortie de groupe.

**24.** Transducteur selon l'une des revendications 2 à 14, qui est réalisé sous la forme d'un transducteur linéaire, caractérisé en ce que les surfaces entourées par des spires de bobines de mesure sont disposées dans un plan qui s'étend environ parallèlement à la direction de déplacement de l'un des deux corps par rapport à l'autre, et en ce que ladite au moins une surface de passage et les surfaces entourées par des spires de bobines de mesure présentent la forme de rectangles allongés qui s'étendent dans la direction de déplacement.

**25.** Transducteur selon la revendication 24, caractérisé en ce que le dispositif de guidage de flux (111, 112) est réalisé de telle sorte que lors du parcours de la zone de déplacement de l'un des deux corps par rapport à l'autre, plusieurs surfaces de passage espacées l'une de l'autre dans la direction de déplacement se déplacent l'une après l'autre au-dessus des surfaces entourées par des spires de bobines de mesure.

**26.** Transducteur selon la revendication 25, caractérisé en ce que les surfaces de passage présentent dans la direction de déplacement les mêmes longueurs et les mêmes écarts et en ce que ces longueurs et écarts sont de même dimension.

**27.** Transducteur selon l'une des revendications 24 à 26, caractérisé en ce que les surfaces entourées par les spires de bobines de mesure des différents groupes sont délimitées sur le côté s'étendant parallèlement à la direction de déplacement par un conducteur continu commun et sur le côté opposé parallèle à la direction de déplacement par deux conducteurs continus, qui en direction du flux magnétique qui peut traverser les surfaces entourées par des spires de bobines de mesure sont disposés en recouvrement l'un derrière l'autre avec un faible écart.

**28.** Transducteur selon la revendication 27, caractérisé en ce que chaque groupe de surfaces entourées par les spires de bobines de mesure comprend deux surfaces de forme rectangulaire allongée qui sont adjacentes l'une à l'autre dans la direction de déplacement avec une zone de bord commune et qui présente respectivement une longueur qui est égale à la longueur des surfaces de passage.

**29.** Transducteur selon la revendication 28, caractérisé en ce que les surfaces entourées par des spires de bobines de mesure d'un groupe sont délimitées au niveau de leurs arêtes d'extrémité qui font face à la zone de bord commune par un conducteur s'étendant transversalement par rapport à la direction de déplacement, qui est relié fixement de manière électriquement conductrice avec un conducteur continu s'étendant dans la direction de déplacement, et peut être relié avec un autre conducteur continu s'étendant dans la direction de déplacement par l'intermédiaire d'un commutateur marche/arrêt actionnable.

**30.** Transducteur selon la revendication 29, caractérisé en ce que sont prévus quatre groupes de surfaces entourées par des spires de bobines de mesure, respectivement décalés l'un par rapport à l'autre d'un quart de la longueur de la surface de passage dans la direction de déplacement, dont respectivement les deux groupes, dont les arêtes d'extrémité des arêtes avant respectivement arrière dans la direction de déplacement des surfaces de passage présentent les plus grands écarts, sont utilisées, en fermant le commutateur marche/arrêt correspondant pour produire les différences de tension ($\Delta U_1$, $\Delta U_2$) nécessaires à la formation des signaux de sortie de groupe.

Fig. 1

Fig. 2

Fig. 3

Fig. 4

# Fig. 5

# Fig. 6

EP 0 528 199 B1

Fig. 7

Fig. 8

# Fig. 9

Fig. 10

Fig. 11